# FASCICULE DE BREVET EUROPEEN

(11) **EP 2 595 932 B1**
(45) Date de publication et mention de la délivrance du brevet: **01.04.2015**
(21) Numéro de dépôt: 11733842.6
(22) Date de dépôt: 18.07.2011
(51) Int. Cl.: C03C 17/00, G02B 1/11, B05D 1/00

(54) **PROCEDE DE FABRICATION D'UN DEPOT DE NANOPARTICULES INORGANIQUES, COMPORTANT DES MICROS-VIDES, SUR UN SUPPORT TRANSPARENT A LA LUMIERE**
VERFAHREN ZUR HERSTELLUNG EINER ABSCHEIDUNG AUS ANORGANISCHEN NANOPARTIKELN MIT MIKROPOREN AUF EINEM LICHTDURCHLÄSSIGEN TRÄGER
PROCESS FOR PRODUCING A DEPOSITION OF INORGANIC NANOPARTICLES, COMPRISING MICROVOIDS, ON A SUPPORT THAT IS TRANSPARENT TO LIGHT

(30) Priorité: 19.07.2010 BE 201000445
(43) Date de publication de la demande: 29.05.2013
(73) Titulaire: AGC Glass Europe, 1348 Louvain-la-Neuve (BE)
(72) Inventeur: DOMERCQ, Benoit, B-6040 Jumet (BE); MARENNE, Ingrid, B-6040 Jumet (BE); MARTINQUET, Samuel, B-6040 Jumet (BE); LAMBLIN, Guillaume, B-1050 Ixelles (BE); DUPONT, Christine, B-1340 Ottignies (BE)
(74) Mandataire: Chabou, Samia
(86) Numéro de dépôt international: PCT/EP2011/062197
(87) Numéro de publication internationale: WO 2012/010533

(56) Documents cités:
- US-A1- 2007 104 922
- US-A1- 2008 038 458
- LEI ZHAI ET AL: "Stable Superhydrophobic Coatings from Polyelectrolyte Multilayers", NANO LETTERS, ACS, WASHINGTON, DC, US, vol. 4, no. 7, 9 avril 2004 (2004-04-09), pages 1349-1353, XP002530271, ISSN: 1530-6984, DOI: DOI:10.1021/NL049463J [extrait le 2004-05-18]

## Description

L'invention concerne un procédé de fabrication d'un dépôt de nanoparticules inorganiques comportant des micro-vides, sur un support transparent à la lumière, ainsi que le dépôt susceptible d'être obtenu par le procédé.

Dans le cadre de l'invention, on entend par « dépôt de nanoparticules inorganiques présentant des micro-vides», un dépôt de nanoparticules inorganiques comportant des cavités de taille micrométrique par exemple formant des « dômes » éventuellement liés entre eux selon la forme du dépôt. La taille des nanoparticules est typiquement comprise entre 5 et 50 nm. L'enveloppe de chaque cavité ou « dôme » élémentaire est donc constituée d'au moins une couche de nanoparticules inorganiques. Par ailleurs, des vides ou espaces peuvent exister entre chaque nanoparticule élémentaire, ici dénommés « nano-vides ».

Le brevet US 2007/0104922 décrit un procédé de fabrication d'un dépôt constitué de plusieurs couches de nanoparticules inorganiques immobilisées sur un support transparent à la lumière via un polyélectrolyte organique. Le dépôt peut être appliqué sur toutes les faces du support, à la condition qu'il soit possible de l'immerger dans la solution aqueuse de préparation dudit dépôt. Il confère des propriétés anti-réfléchissantes au support, mais aucun élément expérimental n'est apporté pour montrer que la diffusion de la lumière est affectée par le dépôt. Il présente également de bonnes propriétés de mouillabilité (superhydrophilie ou, moyennant la réalisation d'un dépôt chimique supplémentaire, superhydrophobie).

Des valeurs de transmission lumineuse au dessus des 99% pour une lumière incidente dans le domaine du visible (400 à 800 nm) sont rapportées dans cette demande de brevet. Les performances optimales obtenues sont de 99,7% en transmission lumineuse (92 % pour un verre normal) et 0,1 % en réflexion lumineuse (8% pour un verre normal).

Il y a un besoin persistant dans le domaine des couches sur support transparent d'améliorer notamment dans le domaine du visible la diffusion de la lumière ainsi que les propriétés anti-réfléchissantes de tels supports.

La présente invention concerne un procédé de fabrication d'un support transparent recouvert d'un dépôt de nanoparticules inorganiques, lequel dépôt comporte des micro-vides, comprenant les étapes suivantes :
(a) application sur un support transparent d'une solution de polyélectrolyte lequel comporte des groupements fonctionnels ionisés, suivie d'au moins une étape de lavage et de séchage, pour former un dépôt de polyélectrolyte chargé sur ledit support ;
(b) application sur ledit dépôt de polyélectrolyte chargé d'une solution de microparticules de polymère comportant des groupements ionisés, de charges opposées à celles du dépôt de polyélectrolyte, suivie d'au moins une étape de lavage pour la formation d'un dépôt de microparticules de polymère chargées sur le dépôt de polyélectrolyte.
(c) recouvrement du dépôt de microparticules de polymère chargées par une solution de polyélectrolyte lequel comporte des groupements fonctionnels ionisés de charges opposées à celles des microparticules de polymère chargées de l'étape (b), suivie d'au moins une étape de lavage et de séchage, pour former un dépôt de polyélectrolyte chargé.
(d) application sur le dépôt de polyélectrolyte chargé d'une solution de nanoparticules inorganiques ionisées, comportant des charges superficielles opposées à celles des charges du polyélectrolyte de l'étape (c), suivi d'au moins une étape de lavage pour former au moins une couche de nanoparticules inorganiques ionisées.
(e) élimination du dépôt de microparticules de polymère selon l'étape b) et des dépôts de polyélectrolyte selon les étapes (a) et (c), pour obtenir le dépôt de nanoparticules inorganiques comportant des micro-vides.

Par la mise en oeuvre du procédé, il est possible de fournir un substrat constitué d'un support transparent, par exemple du verre, comportant un revêtement de nanoparticules inorganiques, la structure du dépôt formant au moins une couche homogène sur toute la surface, le revêtement étant tel qu'il comporte des micro-vides de diamètre variable, typiquement compris entre 0,3 et 5 µm. Ces micro-vides apparaissent à la suite de l'élimination des microparticules de polymère, le taux de recouvrement et la répartition de ces dernières étant ajustable de manière satisfaisante lors de la fabrication du dépôt. Le taux de recouvrement est ici défini comme suit : taux de recouvrement des particules=((100×nombre de particules déposées × aire projetée d'une particule sur le support)/aire totale de la surface).

La répartition sur la surface du support de ces micro-vides peut-être isotrope, c'est-à-dire une répartition identique dans toutes les directions de l'espace considérées sur la surface.

A l'échelle nanométrique, le dépôt de nanoparticules inorganiques est discontinu, c'est-à-dire qu'il contient des nano-vides interparticulaires. Ce dépôt peut-être constitué de plusieurs couches de nanoparticules (dépôt « multicouches »). L'augmentation du nombre des couches du dépôt de ces nanoparticules peut améliorer les propriétés anti-réfléchissantes. Si le nombre de couches appliquées est trop important, il peut aussi en résulter une perte des propriétés anti-réfléchissantes dans le domaine du visible. Par exemple, dans le cas d'un verre clair floaté d'épaisseur 1,9 mm recouvert de nanoparticules d'oxyde de silicium de diamètre 22 nm, le nombre de couche maximum applicable est de 10 à 12.

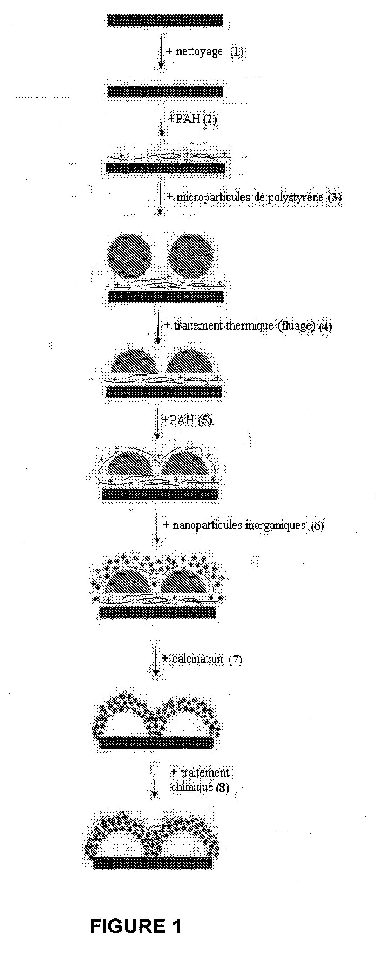

Un tel substrat susceptible d'être obtenu par le procédé est par exemple illustré à la Figure 1.

Avantageusement, le dépôt confère des propriétés optiques nouvelles au support, telles qu'une amélioration des propriétés anti-réfléchissantes (diminution de la réflexion lumineuse de 25 à 75% par rapport à la réflexion sur un support de verre clair floaté d'épaisseur 1,9 mm sans dépôt) et une augmentation de la diffusion de la lumière laquelle est située dans la plage de 1 à 20% de la lumière totale, pour des verres clairs et extra-clairs d'épaisseur classiquement mis en oeuvre dans le domaine technique de l'invention (1,5 mm-15 mm), alors qu'une valeur de 0,1% est mesurée pour un support en verre clair floaté d'épaisseur 1,9 mm sans dépôt. Il présente également des propriétés de mouillabilité, hydrophilie et/ou superhydrophilie notamment, particulièrement durables dans le temps, de préférence entre 3 et 15 mois, très avantageusement entre 6 et 11 mois.

L'existence de vides de taille micrométrique dans le dépôt de la présente invention assure, contrairement à l'enseignement de US 2007/0104922, un certain degré de diffusion de la lumière tout en maintenant la transparence du verre. En ajustant le volume mais aussi la densité de ces micro-vides, il est alors possible de moduler l'importance du phénomène diffusionnel recherché.

Outre les phénomènes diffusionnels de type diffusion de Rayleigh qui ne sont pas affectés ou de manière négligeable par les dépôts de la présente invention, la création de vides de taille proche de celle des longueurs d'onde (ou micro-vides) de la lumière incidente sur une surface favorise la réflexion diffuse du rayon incident de lumière visible. L'importance des phénomènes diffusionnels provoqués par une surface peut être mesurée par l'utilisation d'une sphère d'intégration montée dans un spectrophotomètre. Ce type d'appareillage est aussi appelé un hazemètre. A titre d'exemple, le recouvrement d'un support de verre clair floaté d'épaisseur 1,9 mm par six couches de nanoparticules d'oxyde de silicium de diamètre d'environ 20 nm, n'affecte que légèrement la diffusion de lumière comparée à celle d'un verre nu (haze de 0,1%). En revanche, l'introduction dans ce dépôt de vides sphériques ou micro-vides de diamètre approximatif égal à 500 nm et avec un taux de recouvrement situé autour de 20% augmente de manière significative la diffusion mesurée au hazemètre (haze de 5,5%).

La fabrication de dépôts sur un support transparent à la lumière visible de manière à obtenir des propriétés anti-réfléchissantes sur une gamme de longueur d'onde plutôt qu'à une seule longueur d'onde est réalisable quand un gradient d'indice de réfraction existe sur toute l'épaisseur dudit dépôt (Jeri'Ann Hiller et al, Nature Materials, 2002, 1, 59-63). Les valeurs maximales d'indice de réfraction de ce gradient doivent correspondre aux indices de réfraction du support du dépôt d'un côté, et de l'air de l'autre. La mise en évidence de propriétés anti-réfléchissantes peut être effectuée sur base des spectres de transmission et de réflexion enregistrés avec un spectrophotomètre. A titre d'exemple, le dépôt sur un support en verre de plusieurs couches de nanoparticules d'oxyde de silicium de diamètre environ 20 nm améliore grandement les propriétés anti-réfléchissantes de ce verre. En effet, si un verre clair floaté d'épaisseur 1,9 mm réfléchit jusqu'à 8% de la lumière visible incidente, un verre aux caractéristiques identiques mais recouvert de six couches de nanoparticules de silice de diamètre 20 nm (sans microvides) ne réfléchit que 0,1 % de cette même lumière.

Le support transparent est un matériau de nature inorganique, organique ou une combinaison des deux. Ses dimensions ne sont fixées que par la limite technique apportée par la manière dont les dépôts sont fabriqués: il doit pouvoir être immergé dans la solution de dépôt. Il est transparent, c'est-à-dire qu'il laisse passer la plus grande part de la lumière visible incidente. L'absorption des ondes électromagnétiques dans la gamme du visible (longueur d'onde de 400 à 800 nm environ) par le matériau du support est donc faible. A titre d'exemple, le support transparent peut être du verre ou un matériau polymère à base de polycarbonate ou de poly(méthylméthacrylate). Le verre de tout type, tel que le verre sodocalcique floaté clair, extra clair, coloré, ou borosilicaté, étant le plus préféré. Par verre extra-clair, on entend un verre comprenant une teneur maximale en fer, exprimé sous forme de Fe₂O₃, inférieure à 0,04% en poids, en particulier inférieure à 0,02% en poids. Par verre clair, on entend un verre comprenant une teneur maximale en fer, exprimé sous forme de Fe₂O₃, allant de 0,04 à 0,4% en poids. Le support peut également être chargé positivement et/ou négativement. Il convient de choisir un support résistant aux différents traitements chimiques et/ou physiques de l'invention.

Au sens de la présente invention, un polyélectrolyte est un polymère dont le motif chimique répété est de nature organique, inorganique ou une combinaison des deux. De plus, le motif doit contenir des groupements fonctionnels ionisés dans les conditions d'utilisation. Les polyélectrolytes peuvent être naturels, tel que l'ADN, naturels et modifiés chimiquement, tels la chitine ou la cellulose, ou de synthèse. Dans le contexte de l'invention, tout type de polyélectrolyte convient pourvu qu'il réponde aux définitions ci-dessous.

En fonction des propriétés acide-base du groupement fonctionnel, des polyélectrolytes faibles ou forts peuvent être définis. Un polyélectrolyte cationique porte des ions positifs. A titre d'exemple, un polyélectrolyte cationique faible peut être le poly(hydrochlorure d'allylamine) (PAH). Un polyélectrolyte anionique porte des ions négatifs. A titre d'exemple, un polyélectrolyte anionique fort peut être le polystyrène sulfonate (PSS).

Des exemples de polyélectrolytes de synthèse utilisables, chargés positivement ou négativement, incluent le poly(éthylèneimine), le poly(hydrochlorure d'allylamine) le chlorure d e poly(diallyldiméthylammonium), le poly(styrène sulfonate), le poly(vinylsulfate) et l'acide poly(acrylique). Préférentiellement, les polyélectrolytes utilisés, sont le poly(éthylèneimine), le poly(hydrochlorure d'allylamine), le chlorure de poly(diallyldiméthylammonium). Pour ce dernier, la masse moléculaire est inférieure à 100000 g.mole⁻¹ ou comprise entre 400000 et 500000 g.mole⁻¹. Un exemple de polyélectrolyte inorganique de synthèse est le polysialate, polymère inorganique à base d'aluminosilicate.

Des exemples de polyélectrolytes naturels ou naturels et modifiés chimiquement, chargés positivement ou négativement, peuvent appartenir aux séries des acides nucléiques, des protéines et des polysaccharides. Ce sont par exemples des peptides, des glycopeptides, des polypeptides, des peptidoglycanes, des glycoaminoglycanes, des glycolipides, des lipopolysacharides des protéines, des glycoprotéines, des polycarbohydrates, des polymères d'acides nucléiques, des nucléotides ou des polynucléotides, de l'ARN ou de l'ADN. Préférentiellement, un polyélectrolyte d'origine naturel est la poly-L-lysine.

De manière encore plus préférée, le polyélectrolyte utilisé est le poly(hydrochlorure d'allylamine) ou PAH.

Une microparticule de polymère est, dans la présente invention, une particule en matériau polymère comportant en surface des groupements ionisés, typiquement avec des charges superficielles positives ou négatives, mais celles-ci étant de signe opposé à celles du polyélectrolyte. Ledit matériau polymère est un matériau qui peut être déformé ou éliminé par application d'une température appropriée.

Dans le cadre de l'invention, les particules de polymère chargées seront appelées microparticules.

La déformation, c'est-à-dire le changement de forme et/ou le changement de volume de la particule, est obtenue par application aux particules d'une température voisine de la température de transition vitreuse du polymère. Dans ces conditions, le matériau polymère est plus visqueux et mobile et doit ainsi pouvoir « fluer » de manière à modifier la forme et le volume initialement présent. Dans le cadre de l'invention, cette opération de déformation est une opération de « fluage ». Des microparticules fluées seront des microparticules soumises à cette opération de fluage.

L'élimination du polymère consiste très avantageusement en l'application d'une température suffisante pour pyrolyser le polymère. Dans le cadre de l'invention, cette opération d'élimination des microparticules est une opération de calcination. Des microparticules immobilisées sur un support transparent et calcinées seront des microparticules immobilisées sur un support transparent soumises à cette opération de calcination. Cette élimination peut aussi être obtenue par dissolution du polymère par un solvant organique approprié. Qu'elle soit thermique ou chimique, l'opération d'élimination des microparticules se fera après recouvrement complet des microparticules par les nanoparticules inorganiques ionisées.

A titre d'exemple, les matériaux polymères sont le polystyrène, le polyméthacrylate de méthyle ou la mélamine. Préférentiellement, ils sont constitués par du polystyrène. Les microparticules peuvent être sphériques et monodisperses, c'est-à-dire dont la distribution de taille est très étroite, ou polydisperses, c'est-à-dire dont la distribution de taille est large. Le diamètre des particules est avantageusement compris entre environ 300 nm et environ 5000 nm ou, préférentiellement, compris entre 350 et 3000 nm, de façon très préférée compris entre 400 et 2000 nm ou en particulier entre 450 et 1000 nm. Un mélange de microparticules sphériques de diamètres différents peut aussi être utilisé avec des microparticules dont le diamètre peut varier entre environ 300 nm jusqu'à environ 5000 nm.

Les groupements ionisés de ces microparticules de polymère portent des charges positives ou négatives. La charge de surface peut découler de la présence en surface de groupements chimiques terminés par des sulfates ou des sulfonates, des acides carboxyliques, des amines, des hydroxyles ou des amidines. Les groupements ionisés peuvent aussi être apportés par un mélange en surface de plusieurs de ces groupements chimiques. La nature du groupement chimique peut être différente de celle du matériau polymère constituant la microparticule. La densité des charges résultantes de ces groupements ionisés à la surface des microparticules de polymère peut varier d'un groupement ionisé par 1 Å² à un groupement ionisé par 10000 Å².

A titre d'exemple, les microparticules monodisperses d'un diamètre d'environ 500 nm peuvent être constituées par du polystyrène comportant des groupements sulfate. Ces particules, déposées de manière essentiellement isotrope sur un support en verre clair floaté d'épaisseur 1,9 mm avec un taux de recouvrement de la surface d'environ 20%, immobilisées par le polyélectrolyte PAH, peuvent être ensuite déformées en des formes approximativement hémisphériques par application pendant au moins 30 minutes d'une température de 113 °C (fluage). Elles peuvent être éliminées par application pendant au moins 20 minutes d'une température d'au moins 450 °C (calcination). Un mélange de microparticules peut être un mélange de particules de polystyrène chargées en surface par des groupements sulfate et de diamètres différents compris entre environ 500 nm et environ 5000 nm.

En outre, le matériau polymère peut être identique ou de même famille chimique que le polyélectrolyte.

Les nanoparticules inorganiques ionisées sont des particules constituées par un matériau inorganique. Elles comportent des charges négatives ou positives à leur surface. Ces charges peuvent résulter des oxydes présents en surface. Par exemple, les groupes silanols présents en surface des nanoparticules d'oxyde de silicium peuvent être, selon le pH, totalement ou partiellement dissociés. Les charges peuvent aussi avoir été apportées par fixation de groupements chimiques ionisés comme des groupements sulfate ou des sulfonates, des acides carboxyliques, des amides, des amines, des hydroxyles ou des amidines. Les nanoparticules inorganiques sont, par exemple, sphériques et monodisperses de diamètre compris entre environ 5 nm et environ 50 nm, préférentiellement compris entre 10 et 40 nm, ou, de façon plus préférée, entre 15 et 30 nm. Elles peuvent également être sphériques et polydisperses avec un diamètre compris entre environ 5 nm et environ 50 nm. A titre d'exemple, les nanoparticules peuvent être des nanoparticules d'oxyde métallique, telles que SiO₂ ou TiO₂ portant des charges négatives apportées par les groupements hydroxyles de surface. Elles peuvent aussi être constituées par des nanoparticules d'or recouvertes en surface et chargées par des anions citrate.

La fixation desdits polyélectrolytes, microparticules et nanoparticules sur la surface du support ou sur un dépôt déjà formé est très avantageusement effectuée par la méthode connue de dépôt en « couche-par-couche ». La nature des interactions à l'origine de la fixation est principalement électrostatique (P. Bertrand et al, Macromol. Rapid Commun., 2000, 21, 7, 319-348). Il est aussi possible que d'autres interactions interviennent lors de la formation des dépôts, comme des liaisons hydrogènes, des liaisons covalentes, des liaisons de Van Der Waals etc. La méthode met en oeuvre des étapes de trempage d'un support dans des solutions aqueuses diluées de polyélectrolytes organiques ou inorganiques, ou d'édifices moléculaires (nano ou microparticules organiques ou inorganiques par exemple), chargés positivement ou négativement, à immobiliser. A chaque trempage, une couche des molécules ou des édifices moléculaires est immobilisée sur la couche ou sur le support initialement présent. Il inverse ainsi la charge de la surface, qui devient ainsi disponible pour le dépôt d'une nouvelle couche de molécules ou d'édifices moléculaires de charges opposées. La particularité de ce type de dépôt est ainsi de pouvoir créer en surface des édifices supramoléculaires par l'accumulation de couches des molécules et/ou des édifices moléculaires (dépôts « multicouche ») utilisés à chaque trempage et de charges opposées.

Un dépôt d'une couche de microparticules avec une répartition satisfaisante est un dépôt de microparticules sans agrégats tridimensionnels, c'est-à-dire que les microparticules ne doivent pas être fixées les unes sur les autres mais les unes à coté des autres sur le support. Très avantageusement, les microparticules sont immobilisées sur la surface et espacées les unes des autres, sans contact entre elles, avec des espaces de dimensions environ égales sur toute la surface. Dans ce cas, la répartition est dite isotrope. Il est néanmoins possible que certaines microparticules soient accolées les unes avec les autres formant alors des agrégats appelés bidimensionnels. Il a été toutefois observé l'existence d'agrégats tridimensionnels dans le dépôt. Un taux de recouvrement maximal acceptable de la surface par ces agrégats est de 0,1 à 1%. Si une surface n'est constituée que d'agrégats tridimensionnels consistant en un amoncellement de microparticules les unes sur les autres, alors la répartition ne devra pas être considérée comme satisfaisante par l'homme du métier.

L'épaisseur d'une couche de microparticules est égale au diamètre des microparticules utilisées pour le dépôt.

Le taux de recouvrement de la surface par le dépôt de microparticules sur le dépôt de polyélectrolyte peut être compris entre 15 et 90 %, de préférence entre 20 et 70%.

Le taux de recouvrement des nanoparticules inorganiques ionisées doit être le plus élevé possible de manière à recouvrir complètement le dépôt de microparticules déposées et le support non recouvert par les microparticules. Un recouvrement complet est par exemple obtenu lorsqu'il n'est plus possible d'observer au microscope électronique à balayage (MEB) la surface du support et des microparticules.

Une répartition satisfaisante d'un dépôt de nanoparticules inorganiques ionisées doit répondre aux mêmes caractéristiques que celle d'un dépôt de microparticules avec une répartition satisfaisante.

Cependant, sera aussi considérée comme répartition satisfaisante la configuration où plusieurs couches de nanoparticules inorganiques sont superposées les unes sur les autres. Une couche est ici avantageusement constituée par des nanoparticules régulièrement immobilisées les unes à côté des autres sur le support ou sur une couche sous-jacente avec des espaces interparticulaires de dimensions environ égales sur toute la surface et aussi faibles que possible. Une couche idéale serait constituée par un assemblage périodique et un « close packing » des particules, de disposition hexagonale compacte pour des particules sphériques par exemple. Dans la réalité, la disposition n'est souvent pas périodique et l'interdistance entre les particules peut ne pas être régulière. La présence d'agrégats bidimensionnels peut être possible. Si une surface n'est constituée que d'agrégats tridimensionnels, c'est-à-dire un amoncellement de nanoparticules les unes sur les autres, séparés les uns des autres, avec des zones du support non recouvertes, et consistant en un amoncellement de nanoparticules les unes sur les autres, alors la répartition ne devra pas être considérée comme satisfaisante par l'homme du métier.

L'épaisseur d'une couche est égale au diamètre des nanoparticules utilisées pour le dépôt. L'épaisseur d'une multicouche est en outre égale à la somme des diamètres des nanoparticules constituant chaque couche. A titre d'exemple, un trempage (ou une « application de nanoparticules ») pendant 30 minutes dans une solution colloïdale de nanoparticules de silice de diamètre 22 nm (concentration de 0,1% en masse, 8≤pH≤9 et force ionique de 0,1M) d'une surface de verre clair floaté d'épaisseur 1,9 mm recouvert d'une couche de polyélectrolyte polyallylamine conduit à un dépôt dont l'épaisseur totale est d'environ 50 nm. La surface révèle un dépôt constitué de nanoparticules positionnées les unes à coté des autres et les unes sur les autres. Cette disposition est observable sur tout le support. Si l'on répète plusieurs fois les étapes d'application de polyélectrolyte polyallylamine puis de nanoparticules de silice de diamètre 22 nm, de concentration typique de 0.1% en masse, 8<pH<9 et force ionique de 0.1 M, sur ce même verre recouvert des nanoparticules inorganiques, l'épaisseur du dépôt augmente linéairement avec le nombre de répétitions. Ainsi, l'épaisseur du dépôt vaut environ 100 nm après deux répétitions, 150 nm après trois et 200 nm après 4 répétitions.

A l'étape (a), la formation du dépôt de polyélectrolyte ionisé, sous forme de couche fixée ou immobilisée sur la surface du support, est réalisée très avantageusement par au moins une étape de trempage, en particulier par immersion totale, du support transparent dans des solutions de polyélectrolyte ionisé, généralement aqueuses et de préférence diluées. Comme indiqué plus haut, et sans toutefois être lié par une quelconque théorie, la fixation du polyélectrolyte sur la surface du verre peut se faire par des interactions électrostatiques, des liaisons hydrogènes, des liaisons covalentes ou des liaisons de Van Der Waals. Il en résulte que l'ensemble dépôt-support est chargé positivement ou négativement selon les cas, généralement à la surface du dépôt.

Le pH de la solution de polyélectrolyte est de préférence compris entre 1 et 13, la force ionique entre 10⁻⁶M et 1 M et la concentration du polyélectrolyte ajustée entre 10⁻⁶M et 1 M. Ces paramètres sont ajustés par l'homme du métier de manière à ce qu'ils conduisent à l'élaboration d'une couche de polyélectrolyte dont les propriétés permettront la fixation de microparticules ou de nanoparticules inorganiques ionisées sur la surface du support avec un taux de recouvrement et une répartition satisfaisante. La fixation des microparticules est en effet possible par la présence de charges superficielles sur l'ensemble dépôt-support.

Avantageusement, dans le cas d'un polyélectrolyte cationique, le pH de la solution est compris entre 3 et 13, la force ionique entre 10⁻⁶ M et 10⁻¹M et la concentration entre 10⁻⁶M et 10⁻² M Très avantageusement, le pH de la solution de polyélectrolyte cationique est compris entre 9 et 12, en particulier entre 10 et 11,5, la force ionique entre 10⁻³ et 10⁻² M et la concentration entre 10⁻⁶ M et 10⁻⁴ M.

La durée de l'application de la solution de polyélectrolyte ionisé est, de préférence, comprise entre 30 secondes et 5 heures, de préférence entre 1 minute et 3 heures, en particulier entre 30 minutes et 2 heures. Toutefois, cette durée doit être suffisante pour que la couche de polyélectrolyte déposée et formée permette une immobilisation satisfaisante (taux de recouvrement et répartition) de la couche de microparticules sur le dépôt de polyélectrolyte. Préférentiellement, dans le cas où une couche de polyélectrolyte de polyallylammine (de concentration 10⁻⁵ M, pH=11, force ionique de 10⁻²M) est déposée sur un verre clair floaté d'épaisseur 1,9 mm pour immobiliser des microparticules de polystyrène ou des nanoparticules de silice, la durée de trempage est d'environ 30 minutes.

Après ce trempage, il est nécessaire de procéder au lavage et au séchage du dépôt de polyélectrolyte.

Les conditions de préparation de ces solutions mais aussi de lavage et de séchage entre deux étapes de trempage successives influencent la manière dont se fixera le polyélectrolyte ionisé sur le support. La manière dont se fixe ledit polyélectrolyte ionisé aura une influence sur la répartition des particules chargées de polymère immobilisées via les groupements fonctionnels ionisés du polyélectrolyte. A titre d'exemple, si l'on souhaite déposer des particules chargées de polystyrène dont la charge superficielle négative est assurée par des groupements sulfate et dont le diamètre des particules est d'environ 500 nm, sur une surface de verre clair floaté d'épaisseur 1,9 mm et avec une répartition isotrope, la fin de l'étape d'immobilisation du polyélectrolyte PAH sur le support en verre doit comprendre une étape de lavage et de séchage de la couche de PAH immobilisée.

L'étape de lavage est effectuée préférentiellement dans de l'eau ultra-pure dont le volume utilisé est très avantageusement d'au moins 12 fois le volume de solution de polyélectrolyte ionisé initialement nécessaire pour recouvrir tout le support transparent. Le lavage consiste donc généralement en une succession d'au moins 12 opérations d'ajout d'eau ultrapure et de récupération des eaux de lavage.

L'étape de séchage est de préférence effectuée sous azote, jusqu'à l'observation de la disparition des résidus d'eaux de lavage,

Le procédé de l'invention peut également inclure, avant l'étape (a), une étape de nettoyage du support transparent afin d'en éliminer les contaminants superficiels et d'obtenir un état de surface reproductible pour chaque support. Ceci est généralement effectué par un mélange acide sulfurique/eau oxygénée, 3 :1, v :v, bien que toute méthode classique peut être mise en oeuvre à la condition qu'elle ne dégrade pas le support.

La méthode de dépôt des microparticules sur le dépôt de polyélectrolyte immobilisé sur le support (étape (b)) est généralement mise en oeuvre par trempage du support dans des solutions de microparticules préférentiellement aqueuses et généralement diluées, et étant habituellement colloïdales.

Le pH de la solution de microparticules est de préférence compris entre 1 et 13, la force ionique entre 10⁻⁶ et 1 M et la concentration ajustée entre 0.001% en poids et 50% en poids, de préférence entre 0,01 et 40% en poids, de façon plus préférée de 0,1% à 30% en poids et, en particulier, entre 1% et 20% en poids. Ces paramètres sont toutefois ajustés par l'homme du métier de manière à ce qu'ils conduisent à l'élaboration d'une couche de microparticules dont les propriétés permettront la fixation de nanoparticules inorganiques ionisées sur la surface du dépôt de microparticules avec un taux de recouvrement et une répartition satisfaisante.

La durée de l'application de la solution de particules de polymère comportant des groupements ionisés est, de préférence, comprise entre 10 minutes et 5 heures, de préférence entre 30 minutes et 3 heures et en particulier entre 1 heure et 3 heures. Toutefois, cette durée doit être suffisante pour que la couche de polymère soit immobilisée de manière satisfaisante, c'est-à-dire avec des taux de recouvrement et répartition satisfaisants. Préférentiellement, dans le cas où une couche de polyélectrolyte poly(hydrochlorure d'allylamine) (de concentration 10⁻⁵M/L, pH=11, force ionique de 10⁻²M) est déposée sur le support, le dépôt des microparticules de polystyrène est effectué en 2 heures, avec une solution colloïdale de microparticules de polystyrène comportant des groupements ionisés sulfates ayant les caractéristiques suivantes : 5≤pH≤7, concentration en poids des microparticules de 0,1%.

Le procédé de l'invention comporte une étape (c) de recouvrement du dépôt de particules de polymère chargées (étape (b)) par une solution de polyélectrolyte lequel comporte des groupements fonctionnels ionisés de charges opposées à celles des particules de polymère chargées, suivie d'au moins une étape de lavage et de séchage, pour former un dépôt de polyélectrolyte chargé.

Cette étape est de préférence effectuée par trempage des supports préparés après l'étape (b) et recouverts de microparticules, dans une solution de polyélectrolyte dont les charges des ions sont opposées à celle présentes superficiellement sur des microparticules du support. Ceci conduit à l'immobilisation d'une couche de polyélectrolyte sur les microparticules.

Les caractéristiques de la solution de polyélectrolyte et la durée de dépôt de polyélectrolyte à appliquer sur les microparticules sont très avantageusement les mêmes que celles retenues pour l'élaboration d'une couche de polyélectrolyte sur le support à l'étape (a). Les lavages et séchages à conduire doivent également être de même nature que ceux décrit après l'élaboration d'une couche de polyélectrolyte sur le support à l'étape (a).

L'étape (d) du procédé selon l'invention consiste en l'application sur le dépôt de polyélectrolyte chargé d'une solution de nanoparticules inorganiques ionisées, comportant des charges superficielles opposées à celles des charges du polyélectrolyte de l'étape (c), suivi d'au moins une étape de lavage pour former au moins une couche de nanoparticules inorganiques ionisées.

Elle est de préférence mise en oeuvre par trempage des supports dans des solutions, préférentiellement aqueuses et généralement diluées, de nanoparticules, étant habituellement colloïdales.

Le pH de la solution de nanoparticules inorganiques ionisées est compris entre 1 et 13, la force ionique entre 10⁻⁶ et 1 M et la concentration ajustée entre 0,01% en poids et 50% en poids. Ces paramètres sont ajustés par l'homme du métier de manière à ce qu'ils conduisent à l'élaboration d'une couche de nanoparticules sur la surface du support avec un taux de recouvrement et une répartition satisfaisante.

La durée de l'application de la solution de nanoparticules inorganiques ionisées est, de préférence, comprise entre 30 secondes et 5 heures, de préférence entre 1 minute et 3 heures, en particulier entre 30 minutes et 2 heures. Toutefois, cette durée doit être suffisante pour que la couche de nanoparticules soit immobilisée de manière satisfaisante, c'est-à-dire avec des taux de recouvrement et répartition satisfaisants. Il est possible qu'à l'issue de cette étape le dépôt soit constitué par plusieurs couches de nanoparticules inorganiques, le terme «couche de nanoparticules inorganiques» étant entendu au sens défini dans le contexte de l'invention. Préférentiellement, dans le cas où la couche de nanoparticules inorganique à déposer sur la couche de polyallylammine immobilisée sur les microparticules de polystyrène (chargées en surface par des groupements sulfates), est une couche de nanoparticules de silice de diamètre 22 nm, le dépôt sera effectué en 30 minutes, avec une solution colloïdale de nanoparticules de silice ayant les caractéristiques suivantes : 8≤pH≤9, concentration en masse des nanoparticules de 0.1 % et force ionique de 0,1 M.

L'élimination du matériau polymère constituant les microparticules devant être réalisée après recouvrement complet des microparticules par les nanoparticules inorganiques, il peut être avantageux de prévoir au moins une étape supplémentaire (étape (d')) d'application d'une ou plusieurs couches de nanoparticules inorganiques supplémentaires sur au moins une couche de nanoparticules ionisées obtenue selon l'étape (d).

Dans ce cas, préalablement au dépôt d'une nouvelle couche de nanoparticules inorganiques ionisées (étape d')) sur une couche de nanoparticules ionisées déjà déposée (ancienne couche) (étape (d)), le procédé comprend une étape de recouvrement de ladite ancienne couche par une couche de polyélectrolyte comportant des groupements fonctionnels ionisés dont les charges sont opposées à celles des nanoparticules ionisées. Préférentiellement, le trempage des supports préparés recouverts de l'ancienne couche, dans une solution de polyélectrolyte, dont les charges des ions sont opposées à celles présentes superficiellement sur les nanoparticules ionisées de l'ancienne couche de nanoparticules, conduit à l'immobilisation d'une couche de polyélectrolyte sur l'ancienne couche de nanoparticules.

Dans le présent document, la somme de l'étape (d) et des étapes (d') effectuées est appelée n.

Les inventeurs ont montré qu'une augmentation du nombre de couches de nanoparticules de silice de diamètre 22 nm sur un verre clair floaté d'épaisseur 1,9 mm, avec un taux de recouvrement des microvides d'environ 25%, améliore les propriétés anti-réfléchissantes notamment dans le domaine du visible de telle manière que la transmission lumineuse est située dans la gamme donnée plus haut. En outre, on observe également une augmentation de la diffusion de lumière dans la gamme donnée plus haut. Toutefois, le nombre maximal de couches est généralement compris entre 10 et 12.

Les caractéristiques de la solution de polyélectrolyte et la durée de dépôt de polyélectrolyte à appliquer sur les microparticules sont les mêmes que celles retenues pour l'élaboration d'une couche de polyélectrolyte sur le support aux étapes (a) et/ou (c).

La méthode d'obtention de la nouvelle couche de nanoparticules inorganiques ionisées sur l'ancienne recouverte de polyélectrolyte met avantageusement en oeuvre un trempage des supports dans des solutions de nanoparticules, préférentiellement aqueuses et généralement diluées, habituellement colloïdales.

Les caractéristiques de la solution de nanoparticules inorganiques ionisées et la durée du dépôt de celles-ci sont très avantageusement identiques à celles retenues pour l'élaboration d'une couche de nanoparticules inorganiques sur le support recouvert à l'étape (d).

Les conditions de préparation de ces solutions de nanoparticules mais aussi les lavages et ou séchages entre deux trempages successifs influencent la manière dont se fixeront les microparticules et/ou les nanoparticules inorganiques ionisées.

L'étape de lavage après un dépôt de microparticules et/ou de nanoparticules inorganiques ionisées est effectuée préférentiellement avec de l'eau ultra-pure dont le volume utilisé est avantageusement d'au moins 6 fois le volume de solution de polyélectrolyte ionisé initialement nécessaire pour recouvrir tout le support transparent, puis avec un solvant dont la tension superficielle est au moins, à 20°C, environ 3 fois plus faible que celle de l'eau, tel qu'un alcool, de préférence l'isopropanol, dont le volume utilisé est avantageusement d'au moins 6 fois le volume défini plus haut. L'objectif de l'utilisation d'un solvant ayant une faible tension superficielle est de limiter le rapprochement des microparticules ou nanoparticules déposées sur la surface du support et initialement espacées. Ce phénomène, en partie à l'origine de la formation d'agrégats, est observé lors du séchage et se produit sous l'effet de la tension superficielle du mince film de solvant piégé entre les particules.

Le lavage consiste donc avantageusement en une succession d'au moins 6 opérations d'ajout d'eau ultrapure et d'au moins 6 opérations d'ajout d'un solvant de faible tension superficielle et de récupération des résidus de lavage.

Il peut être également prévu une étape de séchage après l'étape de lavage de l'étape (d), de préférence effectuée sous azote, jusqu'à l'observation de la disparition des résidus de lavage.

En variante, après l'étape (b) de dépôt des microparticules de polymère et avant l'étape (c), il est aussi possible de s'affranchir de l'étape de lavage au solvant de faible tension superficielle et de la remplacer par des lavages à l'eau, si l'on a déposé une couche de nanoparticules inorganique ionisées sur les zones du support non encore recouvertes par les microparticules.

Dans le cas où un trempage dans la solution de nanoparticules inorganiques ionisées suffit à déposer plusieurs couches en une seule fois, les zones du support non recouvertes par les microparticules sont alors recouvertes de plusieurs couches de nanoparticules inorganiques. L'immobilisation des nanoparticules est possible dans la mesure où les zones du support non recouvertes par les microparticules restent couvertes d'un dépôt de polyélectrolyte chargé. Selon le diamètre relatif des nanoparticules utilisées comparé à celui des microparticules mais également selon le taux de recouvrement de la surface par ce dépôt de nanoparticules, la ou les couche(s) de nanoparticules déposée(s) sur le support entre les microparticules empêcheront leur rapprochement. L'homme du métier choisira le diamètre approprié des nanoparticules de manière à observer la limitation du rapprochement des microparticules et ce par des essais de routine. Le diamètre des nanoparticules utilisé peut éventuellement être différent de celui ou ceux utilisé(s) lors des étapes (d) et (d'). L'utilisation de cette ou ces couche(s) de nanoparticules pour empêcher le rapprochement des microparticules ne doit cependant pas altérer les propriétés optiques (diffusion lumineuse et propriétés anti-réfléchissantes) apportées par le dépôt.

Le dépôt de nanoparticules inorganiques sur la surface du support non recouverte par les microparticules est de préférence mise en oeuvre par trempage des supports dans des solutions, préférentiellement aqueuses et généralement diluées, de nanoparticules qui sont habituellement colloïdales. Les caractéristiques des solutions colloïdales sont très avantageusement identiques à celles retenues pour l'élaboration d'une couche de nanoparticules inorganiques ionisées sur le support recouvert de microparticules (étape (d)).

Dans ce cas, il est possible d'appliquer l'étape (c) immédiatement après l'étape de lavage à l'eau au cours de l'étape (b). Le lavage est alors de préférence constitué par une succession d'au moins 12 opérations d'ajout d'eau ultrapure et de récupération des résidus de lavage. Immédiatement après le dernier lavage, on peut tremper le support modifié dans la solution de polyélectrolyte utilisée pour l'étape (c) subséquente. Il n'est donc pas nécessaire de sécher les surfaces après leur lavage.

En variante, le procédé peut très avantageusement inclure une étape (b'), entre les étapes (b) et (c), d'application d'une température suffisante pour fluer les microparticules. On applique une température voisine de la température de transition vitreuse du matériau polymère constituant les microparticules pendant la durée suffisante pour obtenir la forme souhaitée. Avantageusement, dans le cas où des microparticules sphériques de polystyrène, chargées en surface par des groupements ionisés de type sulfate, de 500 nm de diamètre, sont immobilisées sur du verre via une couche de polyallylamine, l'application d'une température de 113°C pendant 30 minutes transformera les sphères en hémisphères dont le diamètre à la base vaut environ 500 nm et la hauteur 400 nm.

La densité de surface des microparticules immobilisées sur le support transparent via un polyélectrolyte ionisé peut être contrôlée aisément en augmentant la concentration massique en microparticules de la solution de dépôt définie plus haut. A titre d'exemple, l'immobilisation sur un verre clair floaté d'épaisseur 1,9 mm de particules de polystyrène, chargées en surface négativement grâce à des groupements sulfates et de diamètre environ 500 nm, à partir d'une solution à 0,1% en poids, aboutit à des densités surfaciques en microparticules d'environ 25%. Si l'on utilise une concentration massique en solution de 5%, les densités de surface en particules de polystyrène obtenues sont de l'ordre de 50%. Cette augmentation de la densité des microparticules favorise, après formation des microvides, l'augmentation de la diffusion lumineuse du support recouvert d'un tel dépôt.

Selon la présente invention, l'obtention de dépôts de microparticules sur le dépôt de polyélectrolyte immobilisé sur le support (étape (b)) puis de dépôt de nanoparticules inorganiques ionisées sur les microparticules recouvertes au préalable par une couche polyélectrolyte (étapes (c) et (d)) se fait très avantageusement selon la méthode de dépôt en « couche-par-couche » mentionnée précédemment. Etant donné que les interactions sont essentiellement de nature électrostatique, les charges présentes dans le polyélectrolyte doivent être opposées à celles des microparticules et des nanoparticules inorganiques ionisées.

Sans être lié par une quelconque théorie, on peut toutefois expliquer que les dépôts de polyélectrolyte ionisé sur le support transparent, sur les microparticules ou les nanoparticules, de microparticules sur le dépôt de polyélectrolyte ionisé et enfin, de nanoparticules inorganiques ionisées sur le dépôt de microparticules recouvert de polyélectrolyte ou de nanoparticules recouvertes de polyélectrolyte, engendrent à chaque dépôt une inversion des charges de la surface où ils sont immobilisés, c'est-à-dire que le nombre global de charges du composé ionisé à déposer est supérieur à celui des charges du dépôt ionisé initialement présent, lesdites charges étant de signe opposé, ce qui permet les interactions électrostatiques. A l'endroit où se déroule l'immobilisation, Il en résulte un bilan en charges superficielles globales en faveur de celles du composé à déposer.

Après l'étape (d), et éventuellement l'étape (d'), le procédé comprend une étape (e) d'élimination du dépôt de microparticules de polymère et des dépôts de polyélectrolyte selon les étapes (a) et (c), pour obtenir le dépôt de nanoparticules inorganiques comportant des micro-vides.

L'étape (e) est très avantageusement mise en oeuvre par chauffage du support recouvert des couches définies précédemment. Le chauffage doit être tel qu'une calcination ait lieu. Cette opération est destinée à éliminer le polymère des microparticules et le polyélectrolyte. Après ce traitement, le polymère des microparticules et le polyélectrolyte, présents à l'origine, deviennent indétectables lors d'une analyse de la surface par spectroscopie de photoélectron X (XPS) par exemple. La température appliquée est aisément déterminable par l'homme du métier mais elle ne doit cependant pas dégrader le support. Ledit traitement est appelé traitement de calcination et est appliqué après recouvrement complet des microparticules par des nanoparticules inorganiques. Un recouvrement complet est par exemple obtenu lorsqu'il n'est plus possible d'observer au microscope électronique à balayage (MEB) la surface du support et des microparticules. A titre d'exemple, des microparticules de polystyrène immobilisées sur une surface de verre clair floaté d'épaisseur 1,9 mm et recouvertes de six couches de nanoparticules de silice peuvent être éliminées par application d'une température de 450°C à 600°C pendant au moins 20 minutes.

Préalablement à l'élimination des microparticules et du polyélectrolyte par traitement thermique ou chauffage, entre les étapes (d), éventuellement (d'), et l'étape (e), les supports modifiés peuvent être immergés dans une solution d'un sel, typiquement de concentration 0,1 M pendant 30 à 120 minutes environ. Les lavages à l'eau après la dernière application de nanoparticules par exemple de silice mentionnés précédemment peuvent également être réalisés avec une solution d'un sel si l'on désire soumettre les échantillons à une calcination. On peut en plus laisser l'échantillon dans une solution de ce sel après le séchage complet suivant la formation de dépôt de nanoparticules inorganiques ionisées. L'ensemble de ces traitements favorise, à des degrés plus importants si l'on emploie un sel, le lien par frittage entre les nanoparticules entre elles et/ou avec le support. Le sel représente typiquement NaCl.

En variante, les microparticules recouvertes par les nanoparticules inorganiques, ainsi que le dépôt de polyélectrolyte, peuvent être éliminés par l'utilisation d'un solvant apte à dissoudre ces polymères. A titre d'exemple, ceux-ci sont les hydrocarbures aromatiques, tels que le benzène, le toluène, le xylène et l'éthylbenzène, les solvants à base d'hydrocarbures chlorés aliphatiques, tels que le dichlorométhane, le chloroforme ou le tétrachlorure de carbone. D'autres solvants peuvent aussi être utilisés, tels que la pyridine, le dioxane, le diméthylformamide, la cyclohexanone, le tétrahydrofuranne, l'acétate d'éthyle ou de butyle, et des solvants dérivés du cyclohexane. Si on laisse cette même surface de verre clair floaté d'épaisseur 1,9 mm modifiée par des microparticules de polystyrène dans du tétrahydrofurane ou du chloroforme pendant au moins une heure, on élimine également le polystyrène. On peut combiner l'usage d'un solvant des microparticules avec l'application d'ultrasons pour accélérer l'élimination du polymère. Quel que soit le solvant utilisé, il ne doit cependant pas dégrader le support.

On peut faire varier la taille des micro-vides de plusieurs manières.

A cette fin, le procédé peut avantageusement comprendre entre les étapes (b) et (c) une étape (b') de fluage des microparticules, comme décrit plus haut. Ceci consiste en un traitement thermique capable de déformer et de changer le volume des microparticules. Ce terme est utilisé car le polymère constituant les microparticules doit, sous l'effet de l'application d'une température proche de sa température de transition vitreuse, être plus visqueux et mobile et doit ainsi pouvoir « fluer » de manière à modifier la forme et le volume initialement présent. Ce traitement est mis en oeuvre avant le dépôt des nanoparticules inorganiques par la technique en « couche-par-couche » selon les étapes (d) ou (d').

Après l'obtention de la forme et du volume souhaités, on peut alors recouvrir complètement les particules fluées par exemple par plusieurs couches de nanoparticules inorganiques ionisées. Il est possible d'appliquer ce traitement quel que soit le diamètre des microparticules immobilisées, voire à un mélange de microparticules immobilisées de diamètres différents. Dans le cas où les diamètres des microparticules utilisées sont compris entre 300 nm jusqu'à environ 5000 nm, les microparticules fluées seront transformées en hémisphères de diamètre à la base compris entre 300 et 5000 nm et une hauteur comprise entre 250 et 4000 nm. A titre d'exemple, il est possible de fluer des particules sphériques de polystyrène, de diamètre 500 nm et chargées négativement en surface par des groupements sulfates et immobilisées sur un support en verre clair floaté d'épaisseur 1,9 mm par application d'une température de 113°C pendant 30 minutes. Lors de ce traitement, les particules de polystyrène de forme initialement approximativement sphérique sont transformées en une forme approximativement hémisphérique. Le recouvrement complet par plusieurs couches de nanoparticules d'oxyde de silicium SiO₂ de diamètre 22 nm puis l'élimination des microparticules de polymère conduit à des structures hémisphériques vides dont l'enveloppe est constituée par des nanoparticules de silice. Le diamètre à la base de ces hémisphères est approximativement de 500 nm, mesuré au microscope électronique à balayage ou MEB, et la hauteur approximativement de 400 nm, mesurée en microscopie à force atomique ou AFM.

En variante, il est aussi possible d'utiliser des microparticules de diamètres différents compris entre environ 300 nm jusqu'à environ 5000 nm ou, préférentiellement, compris entre 350 et 3000 nm, de façon très préférée compris entre 400 et 2000 nm ou en particulier entre 450 et 1000 nm. Par exemple, l'immobilisation de particules sphériques de polystyrène chargées négativement en surface, de diamètre 500 nm, immobilisées sur un support en verre clair floaté d'épaisseur 1,9 mm avec une répartition isotrope, recouvertes de plusieurs couches de nanoparticules de silice puis éliminées, conduit à des micro-vides sphériques dont le diamètre est approximativement de 500 nm (mesuré au MEB). Si l'on utilise des particules chargées de polymère de diamètre égal ou supérieur à 1000 nm, les micro-vides formés finalement auront un diamètre d'environ 1000 nm (mesuré au MEB).

Les dépôts réalisés selon la présente invention comportent à la fois des structures de tailles micrométriques enveloppant les micro-vides mais aussi des structures de taille nanométriques, autour des nano-vides. Cette structuration en deux échelles de grandeurs, pouvant être répartie de manière isotrope sur le support, est similaire à la structure bien connue des feuilles de Lotus superhydrophobes (Neinhuis C., Barthlott W., *Ann. Bot.* 1997, 79, 677). Ces feuilles présentent en effet une rugosité à deux échelles combinée avec une chimie de surface favorable à l'hydrophobie. Un matériau hydrophile est un matériau qui présente une affinité pour l'eau. Il est facilement mouillable avec de l'eau. Inversement, un matériau hydrophobe est un matériau qui présente peu d'affinité pour l'eau. Il a une faible mouillabilité. La mesure d'angle de contact de l'eau d'un matériau par la méthode de la goutte sessile permet de caractériser le degré d'hydrophilie ou d'hydrophobie de ce matériau. Lorsqu'un matériau est superhydrophobe, il donne des angles de contact très importants (150° ou plus). Dans le cas d'un matériau superhydrophile, le matériau est quasi instantanément recouvert d'un film d'eau et l'angle de contact est alors très faible (5° ou moins). Comme cela a été démontré par Wenzel et Cassie, la création d'une structuration à deux échelles combinée à une chimie de surface favorable à l'hydrophilie est de nature à favoriser la superhydrophilie (Wenzel R.N. J., Phys. Colloid Chem. 1949, 53, 1466 ; Wenzel R.N. J., Ind Eng. Chem. 1936, 28, 988 ; Cassie A. B. D., Baxter S., Trans. Faraday Soc., 1944, 40, 546). Les propriétés de superhydrophobie des surfaces peuvent par exemple être utiles pour réaliser des surfaces autonettoyantes et/ou résistantes à l'eau. Les propriétés de superhydrophilie des surfaces peuvent être avantageusement utilisées pour éliminer la condensation de l'eau sous forme de gouttelettes sur de telles surfaces. Les dépôts de la présente invention présentent un caractère hydrophile très marqué voire un caractère superhydrophile. La durabilité dans le temps de ces caractères est particulièrement bonne et elle est de l'ordre d'au moins plusieurs mois, typiquement entre 3 et 15 mois, de préférence entre 6 et 11 mois. A titre d'exemple, une surface de verre recouverte de deux couches de nanoparticules de silice et incluant des micro-vides de forme hémisphérique avec une répartition isotrope présente, juste après fabrication, un angle de contact de l'eau non mesurable, inférieur à 10°. La goutte d'eau utilisée pour la mesure forme un film d'eau sur la surface en un temps inférieur à la seconde. Quinze mois après la fabrication de ce dépôt, cette même surface conservée dans l'obscurité au contact de l'air ambiant, à l'intérieur d'une armoire, présente toujours un angle de contact non mesurable, inférieur à 10°. Après une durée de conservation égale dans des conditions similaires, un support de verre recouvert d'une couche de nanoparticules de silice de diamètre 22 nm (angle de contact initial < 10°) présente un angle de contact d'environ 25°. Onze mois après la fabrication de ce dépôt, cette même surface conservée tantôt à la lumière tantôt à l'obscurité au contact de l'air ambiant, à l'extérieur, sur la terrasse d'un bâtiment, possède toujours un angle de contact non mesurable, inférieur à 10°. Après une durée de conservation égale dans des conditions similaires, un support de verre recouvert d'une couche de nanoparticules de silice de diamètre 22 nm (angle de contact initial < 10°) présente un angle de contact d'environ 30°.

Le recouvrement des dépôts de la présente invention par des composés chimiques présentant des fonctionnalités hydrophobes, permet de donner un caractère très hydrophobe, voire superhydrophobe aux dépôts de la présente invention. Les composés en question peuvent être des molécules dérivées du silicium polymérisables en surface et comportant des fonctionnalités hydrophobes, tels que des chaînes aliphatiques hydrogénocarbonées ou fluorocarbonées. A titre d'exemple, la même surface de verre telle que modifiée ci-dessus et recouverte d'un film de tridécafluoro-1,1,2,2-tétrahydrooctyltrichlorosilane appliqué en phase liquide, peut présenter un angle de contact de l'eau de 131°.

Selon des mises en oeuvre de l'invention, le procédé peut comprendre une étape (f), mise en oeuvre après l'étape (e), de consolidation du dépôt de nanoparticules inorganiques comportant des micro-vides.

Différentes méthodes, autres ou complémentaires à la calcination, peuvent être employées.

On peut également utiliser une combinaison de plusieurs d'entre elles. En effet, en plus d'éliminer les particules chargées de polymère, la calcination peut renforcer le lien entre les nanoparticules inorganiques ionisées entre elles ou avec le support. On peut aussi par exemple utiliser un traitement chimique mettant en oeuvre un liant moléculaire, macromoléculaire ou un polymère à base de silicium ou de zirconium pour consolider les dépôts des nanoparticules inorganiques ionisées.

Plus spécifiquement, le traitement chimique visant à simplement consolider les surfaces des nanoparticules inorganiques peut être réalisé par l'emploi de molécules dérivées du silicium ou de zirconium. Il est appliqué préférentiellement après la calcination. Ces molécules sont dissoutes dans un solvant approprié, tel que le toluène anhydre, le tétrahydrofurane anhydre, un solvant hydrogénocarboné anhydre, dans un alcool anhydre ou de l'eau. Le solvant peut aussi être constitué par un mélange de ces différents solvants dans le cas où les solvants choisis sont miscibles. Si on utilise de l'eau et que le silane à dissoudre est peu soluble dans l'eau, il peut être nécessaire d'ajouter un surfactant non ionique pour former une émulsion. De l'acide acétique peut aussi être ajouté à l'eau pour modifier le pH.

Lesdites molécules dérivées du silicium ou de zirconium polymérisent à la surface des nanoparticules inorganiques ionisées dès que les surfaces modifiées seront immergées dans ledit solvant pendant la durée nécessaire à la formation d'au moins une monocouche. Typiquement l'immersion dure entre 1 et 24h, avec une concentration en poids des molécules dérivées du silicium ou de zirconium comprise entre 0,1 et 50 %, avec éventuellement un chauffage et/ou une agitation de la solution. L'application dudit traitement chimique peut également être effectuée en phase vapeur. La polymérisation engendre des ponts covalents entre les nanoparticules inorganiques ionisées. Typiquement, la molécule dérivée du silicium utilisée est le SiCl₄, que l'on met en solution à au moins 0,1% en poids dans du toluène anhydre. Préalablement à toute application du traitement chimique et pour augmenter la quantité de groupement silanols présents en surface nécessaires pour la polymérisation, les surfaces de support transparent recouvert de nanoparticules inorganiques ionisées peuvent être soumises pendant au moins 15 minutes soit à un plasma d'oxygène et d'ozone formé par irradiation UV d'oxygène, soit à une immersion dans un mélange piranha (H₂SO₄/H₂O₂ 3:1).

Le traitement chimique peut viser à consolider et à fonctionnaliser simultanément les dépôts des nanoparticules inorganiques. Dans ce cas, des molécules organiques dérivées du silicium ou de zirconium peuvent être utilisées. Ce traitement est alors appliqué préférentiellement après la calcination. Ces molécules sont dissoutes dans un solvant approprié, tel que le toluène anhydre, le tétrahydrofurane anhydre, un solvant hydrogénocarboné anhydre, dans un alcool anhydre ou de l'eau. Le solvant peut aussi être constitué par un mélange de ces différents solvants dans le cas où les solvants choisis sont miscibles. Si on utilise de l'eau et que le silane à dissoudre est peu soluble dans l'eau, il peut être nécessaire d'ajouter un surfactant non ionique pour former une émulsion. De l'acide acétique peut aussi être ajouté à l'eau pour modifier le pH.

Lesdites molécules polymérisent à la surface des nanoparticules inorganiques ionisées dès que les surfaces modifiées sont immergées dans ledit solvant pendant la durée nécessaire à la formation d'au moins une monocouche. Typiquement l'immersion dure entre 1 et 24h, avec une concentration en poids du des molécules comprise entre 0,1 et 50%, avec éventuellement un chauffage et/ou une agitation de la solution. L'application dudit traitement chimique peut également être effectuée en phase vapeur. La polymérisation engendre des ponts covalents entre les nanoparticules inorganiques ionisées.

Typiquement, la molécule dérivée du silicium utilisée peut-être (R)₄₋ₙSiClₙ ou (R')₄₋ₙSi (OR")ₙ où n vaut 1, 2 ou 3, où R et R' représentent, indépendamment, des groupements choisis en fonction des fonctionnalités que l'on veut donner aux surfaces nanostructurées. Si l'on souhaite obtenir des propriétés d'hydrophobie, R et R' peuvent donc être choisis de telle manière que les molécules (R)₄₋ₙ"SiClₙ ou (R')₄₋ₙSi (OR")ₙ sont choisis dans le groupe constitué par les dérivés de méthylsilanes, tels que le méthyltrichlorosilane, le méthyltris(méthoxyéthoxy)silane ou le triméthylsoloxytrichlorosilane, les alkyles silanes linéaires, tels que le pentyltrichlorosilane ou l'octadécyltriéthoxysilane, ou ramifiés, tels que l'isobutyltrichlorosilane ou le cyclohexyltriméthoxysilane, les silanes aromatiques, tels que le benzyltrichlorosilane, le phénéthyltriméthoxysilane ou le p-tolyltrichlorosilane, les silanes fluorés, tels que le nonafluorohexyltrichlorosilane, le (3,3,3-trifluoropropyl) trichlorosilane ou le (3,3,3-trifluoropropyl) triméthoxysilane, et les dialkyles silanes, tels que le diéthyldichlorosilane, le diéthyldiéthoxysilane ou le t-butylisopropyldiméthoxysilane.

Pour obtenir des fonctionnalités de type anti-salissures, notamment anti-bactériennes et anti-adsorption de protéines, R et R' peuvent inclure des groupements polyethylène-glycol par exemple. R" est préférentiellement un groupement alkyle comprenant de 1 à 4 atomes de carbone. On dilue par exemple ces molécules à au moins 0,1% en masse dans du toluène anhydre. Préalablement à toute application du traitement chimique et pour augmenter la quantité de groupements silanols présents en surface nécessaires pour la polymérisation, les surfaces de support transparent recouvertes de nanoparticules inorganiques ionisées peuvent être soumises pendant au moins 15 minutes soit à un plasma d'oxygène et d'ozone formé par irradiation UV d'oxygène, soit à une immersion dans un mélange piranha (H₂SO₄/H₂O₂ 3:1). Il est aussi possible d'ajouter en plus un agent à base de silicium favorisant la réticulation (comme SiCl₄)

D'autres méthodes visant à consolider les dépôts peuvent être mises en oeuvre comme l'augmentation du nombre de couches de nanoparticules inorganiques, la calcination après contact plus ou moins prolongé des dépôts avec des sels inorganiques, le recours à un traitement en autoclave avec ou sans contact plus ou moins prolongé avec des sels inorganiques.

L'invention concerne également un substrat comportant un support transparent comportant une couche de dépôt de nanoparticules inorganiques comportant des micro-vides, susceptible d'être obtenu par la mise en oeuvre du procédé de l'invention, décrit plus haut.

D'autres caractéristiques de ce substrat sont celles qui ont été avantageusement décrites plus haut. En particulier, les micro-vides ont des diamètres typiquement compris entre 0,3 et 5 µm.

Avantageusement, les micro-vides présentent une forme hémisphérique de diamètre à la base compris entre 300 et 5000 nm et une hauteur comprise entre 250 et 4000 nm.

Les exemples qui suivent illustrent l'invention sans en limiter la portée, et incluent les figures suivantes.
**FIGURE 1** **:** schéma récapitulatif des étapes de formation des dépôts de la présente invention selon un mode de réalisation préféré de l'invention.
**FIGURE 2** **:** image MEB (Microscope Electronique à Balayage) des surfaces obtenues après l'étape (3) (voir Figure 1) d'immobilisation de particules de polystyrène de diamètre 500 nm. L'insert montre que verre recouvert par ce dépôt est translucide.
**FIGURE 3** **:** images des surfaces obtenues après le traitement thermique visant à la déformation des particules de polystyrène de diamètre 500 nm lors de l'étape (4) (voir Figure 1) : **A**, image enregistrée au MEB ; **B**, image enregistrée en AFM (Microscope à Force Atomique).
**FIGURE 4** **:** image MEB des surfaces obtenues après l'étape (7) de calcination (voir Figure 1) des surfaces avec des micro-vides hémisphériques recouvertes de nanoparticules de silice de diamètre 22 nm (n=3). L'insert montre la transparence du verre recouvert par ce dépôt.
**FIGURE 5** **:** image AFM des surfaces obtenues après l'étape (7) de calcination (voir Figure 1) des surfaces avec des micro-vides hémisphériques recouvertes de nanoparticules de silice de diamètre 22 nm (n=3).
**FIGURE 6** **: A :** spectres XPS enregistrés pour différentes surfaces autour de l'énergie de liaison de l'orbitale 1 s de l'azote ; **B :** spectres XPS enregistrés pour différentes surfaces autour de l'énergie de liaison de l'orbitale 1s du carbone. L'insert agrandit la zone autour des 291,5 eV où un pic caractéristique (« shake-up ») du polystyrène est visible.
**FIGURE 7** **:** spectres de transmission (**A**) et de réflexion lumineuse (**B**) enregistrés dans le domaine du visible pour des surfaces recouverte uniquement de nanoparticules de silice de diamètre 22 nm (n=1 et n=3), comparées au support de verre nettoyé sans dépôt. La nomenclature utilisée est décrite au Tableau 1.
**FIGURE 8** **:** spectres de transmission lumineuse enregistrés dans le domaine du visible pour différentes surfaces préparées au cours des différentes étapes décrites dans la présente invention. La nomenclature utilisée est décrite au Tableau 1.
**FIGURE 9** **:** évolution temporelle des angles de contact statiques de l'eau mesurés pour différentes surfaces préparées au cours des différentes étapes décrites dans la présente invention. (**A**) échantillons conservés à l'obscurité à l'intérieur d'une armoire, (**B**) échantillons conservés à l'extérieur, sur la terrasse d'un bâtiment. La nomenclature utilisée est décrite au Tableau 1.

### Exemple

Les étapes pour réaliser les surfaces recouvertes par un dépôt selon un mode de réalisation préféré de l'invention sont décrites ci-dessous (et schématisées dans la Figure 1). La série d'étapes appliquées conduit à des surfaces de verre recouvertes d'une ou plusieurs couches de nanoparticules inorganiques éventuellement consolidées et incluant des micro-vides sous forme d'hémisphères, dont le taux de recouvrement de la surface peut être ajusté. La méthode de fabrication comporte les étapes suivantes :
**(1)** Le nettoyage d'un support en verre clair floaté de 1,9 mm d'épaisseur est mis en oeuvre par son immersion dans un mélange piranha (H₂SO₄/H₂O₂ 3:1, v :v) pendant une heure, suivie d'un rinçage abondant à l'eau et d'un séchage à l'azote. Ceci permet d'éliminer la plus grande partie des contaminants superficiels et d'obtenir un état de surface reproductible pour chaque support.
(2) L'immersion pendant un temps suffisant pour recouvrir le verre nettoyé d'une couche d'un polyélectrolyte cationique, suivie de lavage. Le polyélectrolyte cationique utilisé est la polyallylamine ou PAH (Sigma Aldrich) mise en solution à une concentration de 10⁻⁵M/L, à un pH = 11 ajusté avec une solution de NaOH 1 M et à une force ionique 10⁻² M ajustée avec une solution de NaCl 0,1 M. Dans ce cas, on immerge le verre nettoyé pendant au moins 30 minutes dans une cuve contenant la solution aqueuse du polyélectrolyte PAH suivi de lavages par dilution. Les lavages, opérés sans que les surfaces de verre ne soient mises en contact avec l'air avant la fin des lavages (elles sont donc toujours recouvertes par la solution de dépôt et/ou les solutions de lavage ajoutées), sont terminés après que l'on ait ajouté dans la cuve de dépôt au moins 12 fois le volume initialement nécessaire pour recouvrir toute la surface de verre avec la solution de polyélectrolyte. Les lavages s'opèrent donc en une succession d'ajouts d'eau ultrapure et de récupérations de la solution de dépôt ainsi diluée (dilution finale de la solution de PAH initiale : 6 ordres de grandeur). S'ensuit un séchage complet à l'azote.
**(3) et (4)** Immédiatement après le séchage de l'étape (2), on immerge la surface de verre modifié par le polyélectrolyte dans une solution colloïdale de microparticules pendant la durée suffisante pour déposer une couche de microparticules (étape 3). Cette opération est suivie de lavage. Les microparticules considérées sont en polystyrène (Invitrogen, IDC Latex, sulfate Latex 10% en masse, diamètre ≥100 nm) dont les charges négatives superficielles sont apportées par des groupements sulfates. On immerge pendant 120 minutes les surfaces de verre recouverte du dépôt de polyélectrolyte ionisé (étape (2)) dans une solution colloïdale de microparticules de polystyrène à 0,1% en poids dans l'eau ultrapure, 5≤pH≤7. A l'issue de ces 120 minutes, on procède à un lavage par dilution à l'eau puis avec de l'isopropanol, en suivant une procédure semblable à celle décrite en (2) : on ajoute d'abord 6 fois le même volume d'eau que celui initialement nécessaire pour recouvrir toute la surface de verre avec la solution de dépôt. Puis on procède à nouveau de la même manière 6 fois avec l'isopropanol (dilution finale de la solution colloïdale initiale : 6 ordres de grandeur). Comme dans l'étape (2), on évite que, pendant les lavages, les surfaces n'entrent en contact avec l'air. Après séchage complet à l'air libre, on soumet le dépôt des microparticules sur le verre à un traitement thermique capable de fluer ces microparticules (étape (4)). Pour des microparticules en polystyrène, on applique un chauffage à 113°C pendant 30 minutes au minimum. C'est à cette étape que se forment des hémisphères par déformation des sphères de polystyrène. Le diamètre et la hauteur des hémisphères valent, respectivement, environ 700 nm et 400 nm, valeurs déterminées par microscopie à force atomique.
**(5)** Après le séchage de l'étape (3) ou la fin de l'étape (4), on applique une nouvelle couche de polyélectrolyte cationique sur les microparticules fluées immobilisées en suivant un protocole identique à celui à l'étape (2), à la différence que le verre est maintenant recouvert de microparticules.
**(6)** Immédiatement après le séchage de l'étape (5), on immerge les surfaces de verre fabriquées à l'issue de l'étape (5) dans une solution colloïdale de nanoparticules inorganiques pendant une durée 30 minutes. Cette durée conduit à un dépôt dont l'épaisseur de 50 nm correspond à l'immobilisation de deux couches de nanoparticules inorganiques ionisées. Cette étape est suivie de lavages. Les nanoparticules sont des nanoparticules d'oxyde de silicium (Si-NPs) de 22 nm de diamètre (LUDOX® TM 50, Sigma Aldrich). Les groupes silanols présents en surface de ces nanoparticules immergées dans la solution aqueuse décrite ci après, sont chargés négativement. On immerge les surfaces de verre pendant au moins 30 minutes dans une solution aqueuse colloïdale à 0,1% en poids, de pH ajusté avec une solution de NaOH 1M tel que 8≤pH≤9 et de force ionique 1=0, 1M ajustée avec du NaCl. A l'issue de ces 30 minutes, on procède à un lavage par dilution à l'eau puis avec l'isopropanol. Comme dans l'étape (3), on évite que, pendant les lavages, les surfaces n'entrent en contact avec l'air. Les lavages appliqués se déroulent comme suit : on ajoute d'abord successivement au moins 6 fois un volume d'eau égal au volume initialement nécessaire pour traiter toute la surface. Puis on ajoute au moins 6 fois un même volume d'isopropanol. On peut seulement mettre en contact le verre avec l'air après le dernier lavage avec le solvant de plus faible tension superficielle. Le verre est alors laissé à l'air libre jusqu'à un séchage complet.
**(7) et (8)** Les surfaces élaborées après l'étape (6) sont soumises à différents traitements thermiques ou chimiques pour éliminer les microparticules, consolider ou consolider et fonctionnaliser les surfaces simultanément.
**- (7)** Pour éliminer les microparticules de polystyrène, le traitement thermique a lieu pendant au moins 20 minutes dans un four à une température comprise entre 450 et 600°C.
**- (8)** Après calcination, le substrat obtenu, constitué du support de verre recouvert d'un dépôt de nanoparticules d'oxyde de silicium (Si-NPs) (étape 6), lequel dépôt comporte des micro-vides, subit un traitement chimique visant à simplement consolider les surfaces des nanoparticules considérées par l'emploi de SiCl₄ à 0,1% en poids dans du toluène anhydre. Ces molécules de SiCl₄, dissoutes dans le toluène, polymérisent à la surface des nanostructures dès que les surfaces des nanoparticules sont immergées dans le toluène pendant la durée de 24 h. La polymérisation crée des ponts covalents entre les nanoparticules inorganiques. Préalablement à toute application du traitement chimique, les surfaces couvertes par les nanoparticules sont soumises pendant au moins 15 minutes à une immersion dans un mélange piranha (H₂SO₄/H₂O₂ 3:1, v :v).

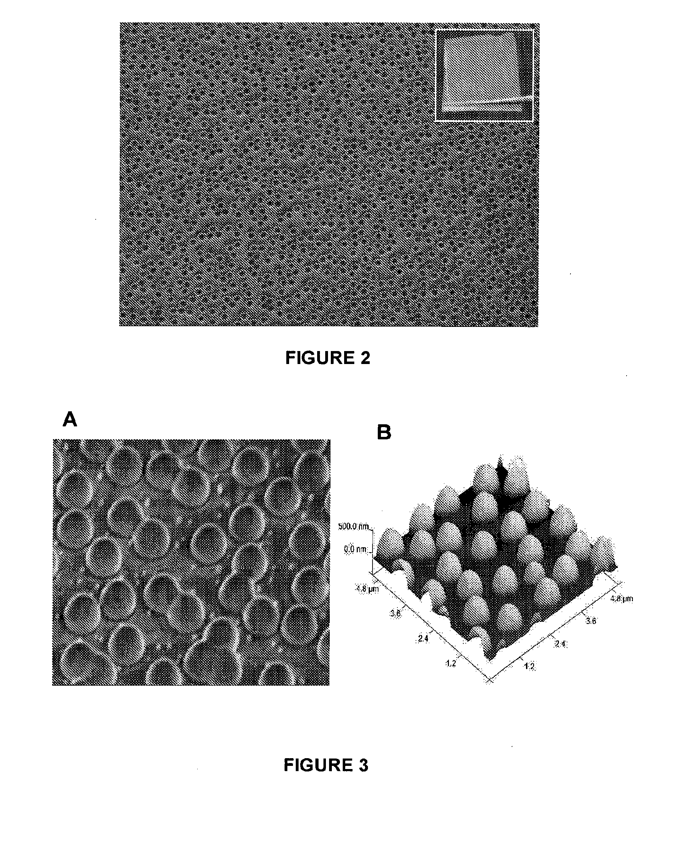

Une analyse au MEB (FEG Digital Scanning Microscope 982 Gemini de la marque Leo) de la répartition de particules de polystyrène chargées en surface par des groupements sulfate et de diamètre 500 nm immobilisées sur du verre avant déformation thermique (fluage) est présentée à la Figure 2. On y observe clairement que la répartition des particules tend vers une répartition isotrope. Une mesure du taux de recouvrement de la surface par ces particules donne une valeur d'environ 20%. A ce stade, l'échantillon obtenu est translucide (voir la Figure 2, insert).

La Figure 3 illustre l'effet du traitement thermique de fluage ayant pour objectif de déformer des particules de polystyrène chargées en surface par des groupements sulfates de diamètre 500 nm immobilisées sur verre clair floaté de 1,9 mm d'épaisseur pour leur donner une forme sensiblement hémisphérique. Les deux images A et B, enregistrées respectivement au MEB et au microscope à force atomique, Nanoscope III A, provenant de Digital Instrument, montrent clairement une forme similaire. Une mesure des dimensions des hémisphères effectuée au MEB aboutit à une largeur à la base des hémisphères d'environ 500 nm. Le même type de mesure effectuée sur les images enregistrées en AFM donne une largeur à la base d'environ 700 nm et une hauteur d'environ 400 nm.

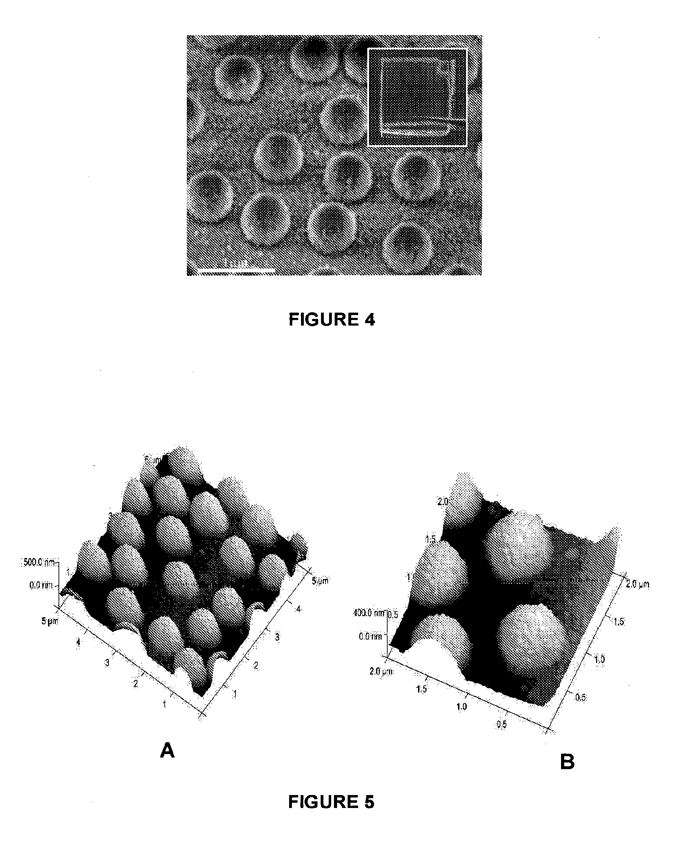

Les dépôts de la présente invention, typiquement obtenus lorsque l'on suit le protocole décrit dans les étapes (1) à (7) et en répétant les étapes (5) et (6) trois fois (n=3), avec des particules de polystyrène et des nanoparticules de silice de diamètre respectif 500 et 22 nm, sont présentés sur les Figures 4 et 5. Comme cela est montré dans l'insert de la Figure 4, le verre retrouve sa transparence. On observe par ailleurs sur les trois images la forme hémisphérique des vides enveloppés de ces nanoparticules de silice. Une mesure des dimensions de ces édifices faite à partir des images prises en AFM donne une largeur à la base de 500 nm et une hauteur d'environ 400 nm.

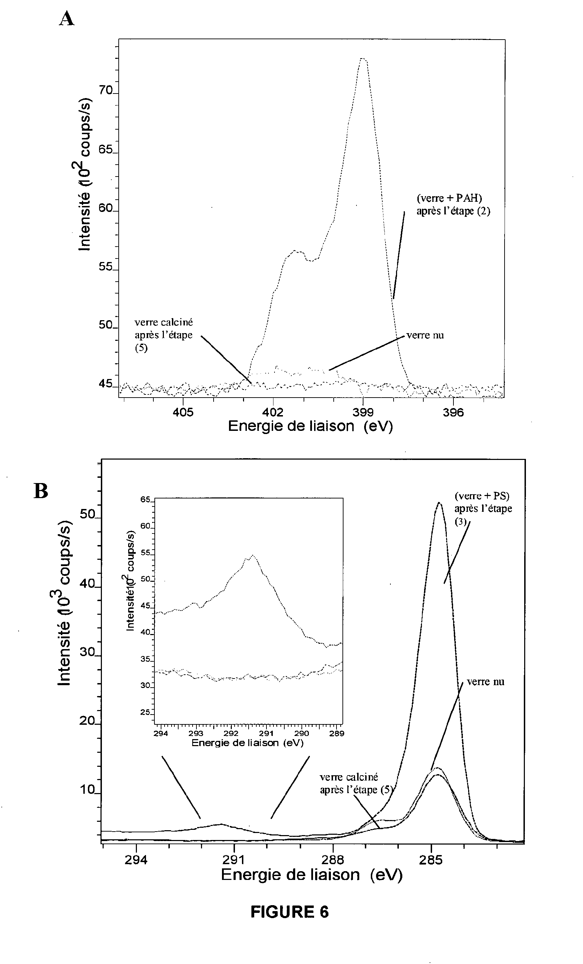

Une analyse de la chimie de surface des revêtements présents à chaque étape du processus de fabrication décrit sur la Figure 1, avec des particules de polystyrène de diamètre 500 nm et des nanoparticules de silice de diamètre 22 nm a été menée par spectroscopie de photoélectron X (ou XPS). Les analyses ont été réalisées sur un spectromètre Kratos Axis Ultra (Kratos Analytical - UK) équipé d'une source en aluminium (10 mA et 15 kV), d'un monochromateur et de 8 multiplicateurs d'électron. Dans tous les cas, l'XPS a permis de confirmer la présence des dépôts attendus. La Figure 6A montre par exemple que les pics caractéristiques du groupement amine protonée à 399.5 V et non protonée à 401.2 V du polyélectrolyte polyallylamine sont présents sur le verre modifié par ce polycation et absents sur le verre nu. On retrouve par ailleurs ce pic caractéristique jusqu'à l'étape 6. Sa disparition après la calcination (étape 7) confirme que le traitement thermique élimine bien le polyélectrolyte ionisé. La présence des particules de polystyrène de la fin de l'étape 3 jusqu'à l'étape 6 avant calcination est aussi clairement mise en évidence sur la Figure 6B. On y retrouve, en effet, un pic satellite caractéristique (« shake up ») du polystyrène à 291.4 eV (insert de la Figure 6B), qui disparaît après la calcination.

L'effet de la présence de différents dépôts sur les propriétés anti-réfléchissantes et de diffusion de la lumière a été examiné. Si les premières ont été évaluées par l'examen de la transmission et de la réflexion lumineuse, mesurées par un spectromètre Lambda 900 avec sphère d'intégration de 150 mm provenant de Perkin Elmer, les secondes l'ont été grâce aux valeurs de haze enregistrées par un hazemètre Hazegard XL-211 avec sphère d'intégration de 150 mm.

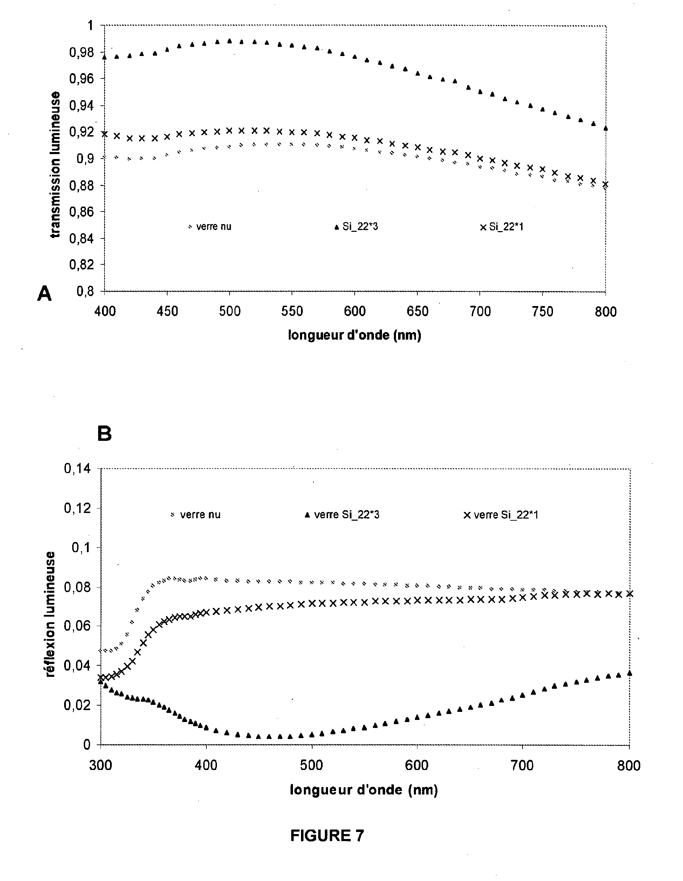

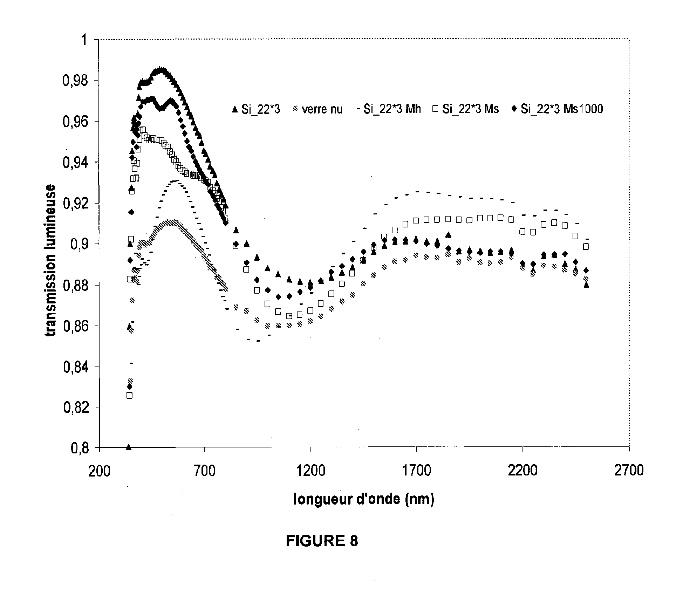

Les Figures 7 et 8 ainsi que le Tableau 1 présentent les résultats obtenus. Les nomenclatures utilisées pour ces Figures sont indiquées dans le Tableau 1 où le « verre nu » est un verre nettoyé avec par exemple une solution piranha.

Ils montrent que le gain en transmission lumineuse observé notamment dans le visible avec les dépôts de la présente invention provient essentiellement de la présence des couches de nanoparticules de silice de 22 nm. En effet, comme le montrent des échantillons témoins recouverts uniquement de nanoparticules de silice de diamètre 22 nm, sans micro-vides (Si_22*3 - n=3 avec n=nombre de répétition des étapes 5 et 6 - et Si_22*1 - n=1), l'augmentation de la transmission lumineuse (Figure 7 A) concomitamment avec la diminution de la réflexion lumineuse (Figure 7 B) s'intensifient avec l'augmentation du nombre de couches de nanoparticules déposées, tout en conservant un haze proche de celui d'un verre nu autour des 0.1%. Cependant, au delà de 4 répétitions, soit 8 couches de nanoparticules de silice, des étapes 5 et 6 (ou les étapes (d) et (d')), on observe une dégradation des propriétés anti-réfléchissantes, notamment dans le domaine du visible. Il y a donc un nombre maximal de répétitions des étapes 5 et 6 à appliquer. Ceci s'observe également dans le cas où des micro-vides sont présents (données non montrées).

Les micro-vides insérés dans les dépôts de la présente invention ont pour effet principal de favoriser la diffusion de la lumière (Tableau 1). En effet, par comparaison avec un échantillon témoin, sans micro-vides, soumis à trois applications de nanoparticules (Si_22*3 - n=3), l'introduction de micro-vides de forme hémisphérique augmente le haze (échantillon « Si_22*3Mh »). Si l'on compare avec un échantillon dans lequel les micro-vides sont de volume plus important car l'étape (4) de fluage thermique n'a pas été appliquée (échantillon « Si_22*3Ms ») on constate que le haze augmente encore. Ceci est aussi valable mais de manière moins prononcée dans le cas où une seule application de nanoparticules a été entreprise (n=1, échantillon sans micro-vides Si_22*1, avec micro vides de forme hémisphériques Si_22*1 Mh et avec micro-vides de forme sphérique Si_22*1 Ms). Il augmente encore plus dans le cas ou les microparticules utilisées sont de diamètre plus important (1000 nm) et n'ont pas été fluées (échantillon « Si_22*3Ms1000 »).

Quelle que soit la configuration évoquée, les exemples démontrent que le support recouvert de l'invention présente des propriétés anti-réfléchissantes meilleures que celles obtenues avec un verre nu. A épaisseur du dépôt de nanoparticules inorganiques constante, par exemple de 150 nm environ, pour un dépôt avec n=3, on observe même que l'augmentation du volume des micro-vides, par absence de fluage et/ou augmentation du diamètre des microparticules, peut améliorer les propriétés anti-réfléchissantes notamment dans le domaine du visible (Figure 8).

L'augmentation du taux de recouvrement des micro-vides (données non montrées) peut également favoriser l'augmentation du haze (échantillons « Si_22*3Ms(d+) » et « Si_22*3Ms1000(d+) » dans le Tableau 1) tout en conservant des propriétés anti-réfléchissantes meilleures que celle d'un verre nu.

Les nano-vides présents entre les nanoparticules de silice induisent une amélioration des propriétés anti-réfléchissantes notamment dans le domaine du visible alors que les micro-vides assurent une diffusion contrôlée de la lumière et dans certains cas favorisent aussi une amélioration des propriétés anti-réfléchissantes dans le visible.

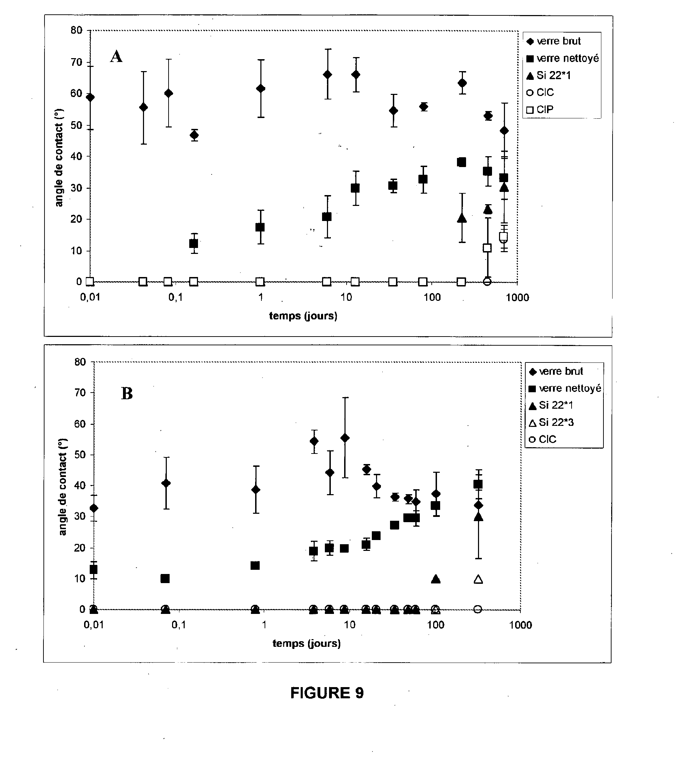

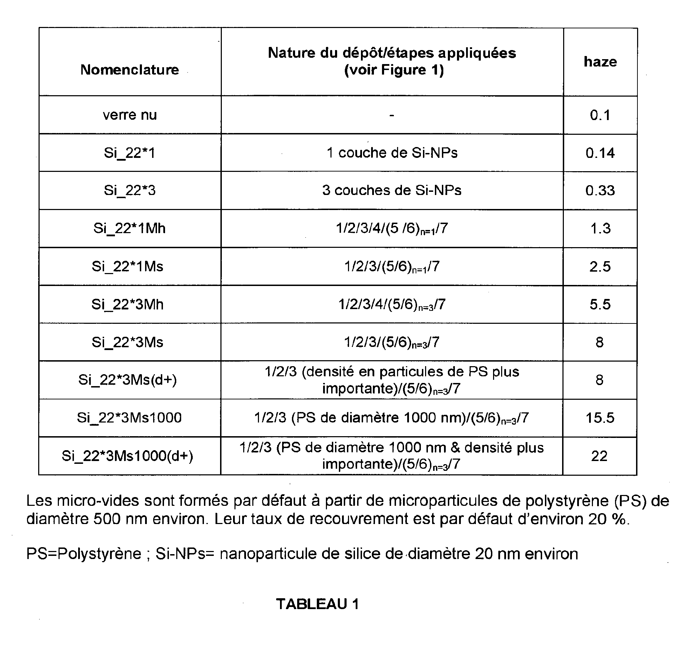

Des mesures d'angle de contact statique de l'eau (Figure 9) sur des surfaces préparées après la calcination à l'étape 7 (échantillon « Si_22*1 Mh» - Tableau 1), donc présentant la rugosité à deux échelles découlant des micro et les nanostructures, ont été faites par la méthode de la goutte sessile avec un équipement « Electronish Ontwerpbureau de Boer » modifié. Les échantillons ont été conservés soit à l'intérieur d'une armoire, dans l'obscurité (Figure 9A), soit à l'extérieur, sur la terrasse d'un bâtiment (Figure 9B).

Les angles de contact mesurés juste après calcination sont inférieurs à 10° et les gouttes d'eau déposées s'étalent quasi instantanément en un film d'eau. Ce résultat est identique à celui obtenu pour une surface de verre fraîchement recouverte d'une couche de nanoparticules d'oxyde de silicium de diamètre environ 20 nm sans les microvides (échantillon « Si_22*1 » dans la Figure 9 - Tableau 1). Cet échantillon témoin a été fabriqué de manière à évaluer l'effet de la rugosité de dimension micrométrique sur les angles de contact mesurés.

On voit donc clairement avec ces résultats qu'il n'est pas possible avec la technique utilisée de différencier juste après leur fabrication les deux surfaces qui présentent un caractère fortement hydrophile. Un examen de la cinétique d'évolution des angles de contact de ces surfaces a aussi été effectué et est présenté sur la Figure 9. A titre de comparaison, d'autres surfaces que celles mentionnées ci-dessus ont été analysées : un verre nu non nettoyé (échantillon « verre brut ») et un verre brut nettoyé par immersion dans une solution piranha (échantillon « verre nettoyé»). Si pendant longtemps, on ne peut pas distinguer la mouillabilité des deux surfaces recouvertes de nanoparticules de silice, après environ 7 mois à l'intérieur et environ 3,5 mois à l'extérieur, le verre recouvert de nanoparticules de silice sans micro-vides (Si_22*1) commence à perdre ses propriétés de forte hydrophilie, à l'inverse de celui incluant les micro-vides. La rugosité à deux échelles qui provient de la combinaison des micro- et nanovides apporte donc une amélioration de la longévité des propriétés de forte hydrophilie. Cette forte hydrophilie perdure jusqu'à environ 15 mois à l'intérieur et au moins 11 mois à l'extérieur.

Ceci est donc également un effet déterminant de l'invention.

## Revendications

1. Procédé de fabrication d'un support transparent recouvert d'un dépôt de nanoparticules inorganiques, lequel dépôt comporte des micro-vides, comprenant les étapes suivantes :
(a) application sur un support transparent d'une solution de polyélectrolyte lequel comporte des groupements fonctionnels ionisés, suivie d'au moins une étape de lavage et de séchage, pour former un dépôt de polyélectrolyte chargé sur ledit support;
(b) application sur ledit dépôt de polyélectrolyte d'une solution de microparticules de polymère comportant des groupements ionisés, de charges opposées à celles du dépôt de polyélectrolyte, suivie d'au moins une étape de lavage pour la formation d'un dépôt de microparticules de polymère chargées sur le dépôt de polyélectrolyte;
(c) recouvrement du dépôt de microparticules de polymère chargées par une solution de polyélectrolyte lequel comporte des groupements fonctionnels ionisés de charges opposées à celles des microparticules de polymère chargées de l'étape (b), suivie d'au moins une étape de lavage et de séchage, pour former un dépôt de polyélectrolyte chargé;
(d) application sur le dépôt de polyélectrolyte chargé d'une solution de nanoparticules inorganiques ionisées, comportant des charges superficielles opposées à celles des charges du polyélectrolyte de l'étape c), suivi d'au moins une étape de lavage pour former au moins une couche de nanoparticules inorganiques ionisées;
(e) élimination du dépôt de microparticules de polymère selon l'étape b) et des dépôts de polyélectrolyte selon les étapes (a) et (c), pour obtenir le dépôt de nanoparticules inorganiques comportant des micro-vides.

2. Procédé selon la revendication 1, dans lequel le support transparent est un matériau de nature inorganique, organique, ou une combinaison des deux, tel que le verre ou un matériau polymère à base de polycarbonate ou de poly(méthyl-méthacrylate).

3. Procédé selon la revendication 1 ou 2, dans lequel la formation du dépôt de polyélectrolyte ionisé selon l'étape (a) est réalisée par au moins une étape de trempage du support transparent dans les solutions aqueuses de polyélectrolyte ionisé.

4. Procédé selon la revendication 3, dans lequel le pH de la solution de polyélectrolyte est compris entre 1 et 13, la force ionique entre 10⁻⁶M et 1 M et la concentration du polyélectrolyte ajustée entre 10⁻⁶M et 1 M.

5. Procédé selon l'une des revendications 1 à 4, dans lequel l'étape d'application de la solution de polyélectrolyte ionisé est effectuée pendant une durée comprise entre 1 minute et 3 heures.

6. Procédé selon l'une des revendications 1 à 5, dans lequel le pH de la solution de microparticules est compris entre 1 et 13, la force ionique entre 10⁻⁶ et 1 M et la concentration ajustée entre 0.001% en poids et 50% en poids.

7. Procédé selon l'une des revendications 1 à 6, dans lequel le pH de la solution de nanoparticules inorganiques ionisées est compris entre 1 et 13, la force ionique entre 10⁻⁶ et 1 M et la concentration ajustée entre 0,01% en masse et 50% en poids.

8. Procédé selon l'une des revendications 1 à 7, comprenant entre les étapes (b) et (c), une étape (b') d'application d'une température suffisante pour fluer les microparticules de polymère chargées.

9. Procédé selon l'une des revendications 1 à 8, comprenant au moins une étape supplémentaire (d') d'application d'une ou plusieurs couches de nanoparticules inorganiques ionisées sur l'au moins une couche de nanoparticules obtenue selon l'étape (d).

10. Procédé selon la revendication 5, comprenant, préalablement au dépôt d'une nouvelle couche des nanoparticules inorganiques ionisées (étape (d')) sur une couche de nanoparticules ionisées adjacente (étape (d)), une étape de recouvrement de ladite couche adjacente de nanoparticules par une couche de polyélectrolyte comportant des groupements fonctionnels ionisés de charges opposées à celles des nanoparticules ionisées.

11. Procédé selon l'une des revendications 1 à 10, dans lequel l'étape (e) d'élimination des microparticules de polymère chargées et du polyélectrolyte est mise en oeuvre par chauffage du support recouvert de couches et dépôts définis selon l'une des revendications précédente, ou par un solvant apte à dissoudre le polymère constitutif du polyélectrolyte et des microparticules de polymère chargées.

12. Procédé selon l'une des revendications 1 à 11, comprenant une étape (f), mise en oeuvre après l'étape (e), de consolidation du dépôt de nanoparticules inorganiques comportant des micro-vides.

13. Substrat comportant un support transparent comportant une couche de dépôt de nanoparticules inorganiques ionisées comportant des micro-vides, susceptible d'être obtenu par la mise en oeuvre du procédé selon l'une des revendications 1 à 8.

14. Substrat selon la revendication 13, dans lequel les micro-vides ont des diamètres compris entre 0,3 et 5 µm.

15. Substrat selon la revendication 14, dans lequel les micro-vides présentent une forme hémisphérique de diamètre à la base compris entre 300 et 5000 nm et une hauteur comprise entre 250 et 4000 nm.

## Patentansprüche

1. Verfahren zur Herstellung eines transparenten Trägers, der mit einer Abscheidung von anorganischen Nanopartikeln bedeckt ist, wobei die Abscheidung Mikrohohlräume enthält, das folgende Schritte umfasst:
(a) Aufbringen einer Lösung von Polyelektrolyt mit ionisierten funktionellen Gruppen auf einen transparenten Träger gefolgt von mindestens einem Wasch- und Trocknungsschritt zur Bildung einer Abscheidung von geladenem Polyelektrolyt auf dem Träger;
(b) Aufbringen einer Lösung von Mikropartikeln aus Polymer mit ionisierten Gruppen mit Ladungen, die denjenigen der Polyelektrolyt-Abscheidung entgegengesetzt sind, auf die Polyelektrolyt-Abscheidung gefolgt von mindestens einem Waschschritt zur Bildung einer Abscheidung von geladenen Polymermikropartikeln auf der Polyelektrolyt-Abscheidung;
(c) Bedecken der Abscheidung von geladenen Polymermikropartikeln durch eine Lösung von Polyelektrolyt mit ionisierten funktionellen Gruppen mit Ladungen, die denjenigen der geladenen Polymermikropartikel von Schritt (b) entgegengesetzt sind, gefolgt von mindestens einem Wasch- und Trocknungsschritt zur Bildung einer Abscheidung von geladenem Polyelektrolyt;
(d) Aufbringen einer Lösung von ionisierten anorganischen Nanopartikeln mit Oberflächenladungen, die denjenigen der Polyelektrolyt-Abscheidung von Schritt c) entgegengesetzt sind, auf die Polyelektrolyt-Abscheidung gefolgt von mindestens einem Waschschritt zur Bildung mindestens einer Schicht von ionisierten anorganischen Nanopartikeln;
(e) Entfernen der Abscheidung von Polymermikropartikeln gemäß Schritt b) und der Polyelektrolyt-Abscheidungen gemäß den Schritten (a) und (c) zum Erhalt der Abscheidung von anorganischen Nanopartikeln, die Mikrohohlräume enthält.

2. Verfahren nach Anspruch 1, bei dem es sich bei dem transparenten Träger um ein anorganisches Material, ein organisches Material oder eine Kombination davon, wie Glas oder ein Polymermaterial auf Basis von Polycarbonat oder Poly(methylmethacrylat), handelt.

3. Verfahren nach Anspruch 1 oder 2, wobei die Bildung der Abscheidung von ionisiertem Polyelektrolyt gemäß Schritt (a) durch mindestens einen Schritt des Eintauchens des transparenten Trägers in die wässrigen Lösungen von ionisiertem Polyelektrolyt durchgeführt wird.

4. Verfahren nach Anspruch 3, bei dem der pH-Wert der Polyelektrolytlösung zwischen 1 und 13 liegt, die Ionenstärke zwischen 10⁻⁶ M und 1 M liegt und die eingestellte Polyelektrolytkonzentration zwischen 10⁻⁶ M und 1 M liegt.

5. Verfahren nach einem der Ansprüche 1 bis 4, bei dem der Schritt des Aufbringens der Lösung von ionisiertem Polyelektrolyt über einen Zeitraum zwischen 1 Minute und 3 Stunden durchgeführt wird.

6. Verfahren nach einem der Anprüche 1 bis 5, bei dem der pH-Wert der Mikropartikellösung zwischen 1 und 13 liegt, die Ionenstärke zwischen 10⁻⁶ M und 1 M liegt und die eingestellte Konzentration zwischen 0,001 Gew.-% und 50 Gew.-% liegt.

7. Verfahren nach einem der Anprüche 1 bis 6, bei dem der pH-Wert der Lösung von ionisierten anorganischen Nanopartikeln zwischen 1 und 13 liegt, die Ionenstärke zwischen 10⁻⁶ M und 1 M liegt und die eingestellte Konzentration zwischen 0,01 Gew.-% und 50 Gew.-% liegt.

8. Verfahren nach einem der Ansprüche 1 bis 7, umfassend zwischen den Schritten (b) und (c) einen Schritt (b') des Anwendens einer zum Fließen der geladenen Polymermikropartikel ausreichenden Temperatur.

9. Verfahren nach einem der Ansprüche 1 bis 8, umfassend mindestens einen zusätzlichen Schritt (d') des Aufbringens einer oder mehrerer Schichten von ionisierten anorganischen Nanopartikeln auf die mindestens eine gemäß Schritt (d) erhaltene Nanopartikelschicht.

10. Verfahren nach Anspruch 5, umfassend vor der Abscheidung einer neuen Schicht von ionisierten anorganischen Nanopartikeln (Schritt (d')) auf eine benachbarte Schicht von ionisierten Nanopartikeln (Schritt (d)) einen Schritt des Bedeckens der benachbarten Nanopartikelschicht durch eine Schicht von Polyelektrolyt mit ionisierten funktionellen Gruppen mit Ladungen, die denjenigen der ionisierten Nanopartikel entgegengesetzt sind.

11. Verfahren nach einem der Ansprüche 1 bis 10, bei dem der Schritt (e) des Entfernens der geladenen Polymermikropartikel und des Polyelektrolyts durch Erhitzen des mit den Schichten und Abscheidungen gemäß einem der vorhergehenden Ansprüche bedeckten Trägers oder durch ein Lösungsmittel, das zum Auflösen des Polymers, aus dem der Polyelektrolyt aufgebaut ist, und der geladenen Polymermikropartikel befähigt ist, durchgeführt wird.

12. Verfahren nach einem der Ansprüche 1 bis 11, umfassend einen nach Schritt (e) durchgeführten Schritt (f) des Konsolidierens der Abscheidung von organischen Nanopartikeln, die Mikrohohlräume enthält.

13. Substrat mit einem transparenten Träger mit einer Schicht aus einer Abscheidung von ionisierten anorganischen Nanopartikeln, die Mikrohohlräume enthält, das durch Durchführung des Verfahrens nach einem der Ansprüche 1 bis 8 erhältlich ist.

14. Substrat nach Anspruch 13, bei dem die Mikrohohlräume einen Durchmesser zwischen 93 und 5 µm aufweisen.

15. Substrat nach Anspruch 14, bei dem die Mikrohohlräume eine Halbkugelform mit einem Basisdurchmesser zwischen 300 und 5000 nm und einer Höhe zwischen 250 und 4000 nm aufweisen.

## Claims

1. Process for the production of a transparent support covered with a deposit of inorganic nanoparticles, said deposit having micro gaps, comprising the following steps:
(a) application of a solution of polyelectrolyte having ionised functional groups to a transparent support, followed by at least one washing and drying step to form a charged polyelectrolyte deposit on said support;
(b) application of a solution of polymer microparticles having ionised groups with charges opposed to those of the polyelectrolyte deposit to said polyelectrolyte deposit, followed by at least one washing step for the formation of a deposit of charged polymer microparticles on the polyelectrolyte deposit;
(c) covering the deposit of charged polymer microparticles with a solution of polyelectrolyte having ionised functional groups with charges opposed to those of the charged polymer microparticles of step (b), followed by at least one washing and drying step to form a charged polyelectrolyte deposit;
(d) application of a solution of ionised inorganic nanoparticles having surface charges opposed to those of the charges of the polyelectrolyte of step (c) to the charged polyelectrolyte deposit, followed by at least one washing step to form at least one layer of ionised inorganic nanoparticles;
(e) removal of the deposit of polymer microparticles of step (b) and the deposits of polyelectrolyte of steps (a) and (c) to obtain the deposit of inorganic nanoparticles having micro gaps.

2. Process according to claim 1, in which the transparent support is a material that is inorganic or organic in nature, or a combination of both, such as glass or a polycarbonate- or poly(methyl methacrylate)-based polymer material.

3. Process according to claim 1 or 2, in which the formation of the deposit of ionised polyelectrolyte according to step (a) is conducted by at least one step of wetting the transparent support in aqueous solutions of ionised polyelectrolyte.

4. Process according to claim 3, in which the pH of the polyelectrolyte solution lies in the range of between 1 and 13, the ionic strength lies between 10⁻⁶M and 1 M and the adjusted concentration of the polyelectrolyte lies between 10⁻⁶M and 1 M.

5. Process according to one of claims 1 to 4, in which the step of applying the ionised polyelectrolyte solution is conducted for a period of between 1 minute and 3 hours.

6. Process according to one of claims 1 to 5, in which the pH of the solution of microparticles lies in the range of between 1 and 13, the ionic strength lies between 10⁻⁶ and 1 M and the adjusted concentration lies between 0.001% by weight and 50% by weight.

7. Process according to one of claims 1 to 6, in which the pH of the solution of ionised inorganic nanoparticles lies in the range of between 1 and 13, the ionic strength lies between 10⁻⁶ and 1 M and the adjusted concentration lies between 0.01% by weight and 50% by weight.

8. Process according to one of claims 1 to 7, comprising between steps (b) and (c) a step (b') of applying an adequate temperature to cause creep of the charged polymer particles.

9. Process according to one of claims 1 to 8, comprising at least one additional step (d') of applying one or more layers of ionised inorganic nanoparticles to the at least one layer of nanoparticles obtained according to step (d).

10. Process according to claim 5, comprising before the deposition of a new layer of ionised inorganic nanoparticles (step (d')) to an adjacent layer of ionised nanoparticles (step (d)), a step of covering said adjacent layer of nanoparticles with a layer of polyelectrolyte having ionised functional groups with charges opposed to those of the ionised nanoparticles.

11. Process according to one of claims 1 to 10, in which step (e) of removing the charged polymer microparticles and the polyelectrolyte is conducted by heating the support covered with layers and deposits defined according to one of the preceding claims, or by a solvent capable of dissolving the base polymer of the polyelectrolyte and the charged polymer particles.

12. Process according to one of claims 1 to 11, comprising a step (f) performed after step (e) of strengthening the deposit of inorganic nanoparticles having micro gaps.

13. Substrate having a transport support having a deposit layer of ionised inorganic nanoparticles with micro gaps that can be obtained by implementing the process according to one of claims 1 to 8.

14. Substrate according to claim 13, in which the micro gaps have diameters in the range of between 0.3 to 5 µm.

15. Substrate according to claim 14, in which the micro gaps have a hemispherical shape with a base diameter in the range of between 300 and 5000 nm and a height in the range of between 250 and 4000 nm.
